# EUROPEAN PATENT SPECIFICATION

(11) **EP 4 501 737 B1**
(45) Date of publication and mention of the grant of the patent: **18.11.2026**
(21) Application number: 22935045.9
(22) Date of filing: 28.03.2022
(51) Int. Cl.: B60W 50/10, G01C 21/26, G08G 1/0968, B60W 60/00, G05D 1/2285, G05D 105/22, G05D 107/13, G05D 109/10, G06F 3/16, G06Q 10/02, G06Q 10/047, G06Q 10/0631, G06Q 50/40, G06V 20/58, G06V 40/10, G08G 1/005, G01C 21/20, G06N 20/00, G08G 1/01, G08G 1/0967, G08G 1/00

(54) **CONTROL DEVICE FOR MOBILE OBJECT, CONTROL METHOD FOR MOBILE OBJECT, MOBILE OBJECT, INFORMATION PROCESSING METHOD, AND PROGRAM**
STEUERUNGSVORRICHTUNG FÜR EIN MOBILES OBJEKT, STEUERUNGSVERFAHREN FÜR EIN MOBILES OBJEKT, MOBILES OBJEKT, INFORMATIONSVERARBEITUNGSVERFAHREN UND PROGRAMM
DISPOSITIF DE COMMANDE POUR OBJET MOBILE, PROCÉDÉ DE COMMANDE POUR OBJET MOBILE, OBJET MOBILE, PROCÉDÉ DE TRAITEMENT D'INFORMATIONS ET PROGRAMME

(43) Date of publication of application: 05.02.2025
(73) Proprietor: HONDA MOTOR CO., LTD., Tokyo 105-8404 (JP)
(72) Inventor: YAMADA Kentaro, Wako-shi, Saitama 351-0193 (JP); YASUI Yuji, Wako-shi, Saitama 351-0193 (JP); TSUKAMOTO Nanami, Wako-shi, Saitama 351-0193 (JP); HOSOMI Naoki, Wako-shi, Saitama 351-0193 (JP); KONDAPALLY Anirudh Reddy, Wako-shi, Saitama 351-0193 (JP); NAKANISHI Kosuke, Wako-shi, Saitama 351-0193 (JP); MATSUNAGA Hideki, Wako-shi, Saitama 351-0193 (JP); JAIN Aman, Wako-shi, Saitama 351-0193 (JP)
(74) Representative: Weickmann & Weickmann PartmbB
(86) International application number: PCT/JP2022/014966
(87) International publication number: WO 2023/187890

(56) References cited:
- WO-A1-2021/047502
- WO-A1-2021/100190
- JP-A- 2019 067 012
- JP-A- 2020 135 113
- JP-A- 2021 177 283
- US-A1- 2018 215 376

## Description

### TECHNICAL FIELD

The present invention relates to a moving object control apparatus, a method for controlling a moving object, a moving object, an information processing method, and a program.

### BACKGROUND ART

In recent years, an electric vehicle called an ultra-compact mobility vehicle (also referred to as a micro mobility vehicle) having a riding capacity of about one or two persons is known, and is expected to spread as an easy movement mechanism.

In order to use the ultra-compact mobility vehicle that travels by automated driving as the easy movement mechanism, it is desirable that the ultra-compact mobility vehicle stops at a suitable place where a user can easily ride. PTL 1 discloses a technique in which, when the user coming out of a house is allowed to ride in an automated driving vehicle, a distance for the user to walk to a riding position is made as short as possible to prevent the user from feeling inconvenience. Furthermore, PTL 2 discloses a technique in which a vehicle traveling by automated driving determines a stop position, when recognizing that an occupant of a self-vehicle is present in a boarding and alighting area, to be a position at which a distance between the self-vehicle and the occupant in the area is within several meters, and travels to the stop position.

### CITATION LIST

### PATENT LITERATURE

PTL 1: Japanese Patent Laid-Open No. 2019-91216
PTL 2: Japanese Patent Laid-Open No. 2020-142720
WO 2021/047502 A1 discloses a target state estimation method used for a UAV, such as a drone. The drone includes a camera device, and a target image captured by the camera device is acquired, and image recognition is performed on the target image to obtain a target image region of the target in the target image. An original point cloud of the environment surrounding the UAV is obtained. Further, a first target position is obtained based on the target image region and the original point cloud.
US 2018/0215376 A1 discloses an online delivery system which uses an automatic driving vehicle, and the automatic driving vehicle parks or stops at the delivery destination in such a way that the recipient is able to receive the package at the delivery destination. The movement of the automatic driving vehicle can be controlled in a case where it is not possible for the automatic driving vehicle to be parked or stopped in a first planned parking/stopping location.

### SUMMARY OF INVENTION

### TECHNICAL PROBLEM

Incidentally, in a case where the user uses the ultra-compact mobility vehicle, a use case is conceivable in which the ultra-compact mobility vehicle and the user dynamically adjust the stop position of the mobility while moving. Such a use case is effective in a case where joining at a scheduled position is difficult due to congestion, restriction, or the like, a case where the stop position is to be finely adjusted, and the like. In the above-described related art, there is no consideration regarding the use case in which the vehicle and the user dynamically adjusts the stop position of the vehicle while moving.

The present invention has been made in view of the above problems, and an object thereof is to realize a technique capable of flexibly adjusting a stop position of a moving object (for example, a vehicle) between a user and the moving object.

### SOLUTION TO PROBLEM

The present invention provides a moving object control apparatus according to the subject matter of independent claim 1, a moving object control method according to independent claim 17, a moving object according to independent claim 18, and an information processing method according to the subject matter of independent claim 19. More specifically, according to the preset invention, a moving object control apparatus that adjusts a stop position of a moving object based on an instruction of a user, the moving object control apparatus characterized by comprising: instruction acquisition means for acquiring instruction information of the user; image acquisition means for acquiring a captured image captured in the moving object; determination means for determining a stop position of the moving object; and control means for controlling traveling of the moving object to cause the moving object to travel toward the determined stop position, characterized in that the determination means (i) determines a first stop position using position information of a communication device used by the user or position information corresponding to a destination included in first instruction information of the user, and (ii) determines a second stop position based on a region of a predetermined target identified in the captured image using second instruction information of the user (130) after controlling traveling of the moving object (100) toward the first stop position and in response to a position of the moving object falling within a predetermined distance from the first stop position by traveling of the moving object is provided.

### ADVANTAGEOUS EFFECTS OF INVENTION

According to the present invention, it is possible to flexibly adjust the stop position of the moving object between the user and the moving object.

### BRIEF DESCRIPTION OF DRAWINGS

FIG. 1 is a diagram illustrating an example of an information processing system according to an embodiment of the present invention.
FIG. 2A is a block diagram (1) illustrating a hardware configuration example of a vehicle according to the present embodiment.
FIG. 2B is a block diagram (2) illustrating the hardware configuration example of the vehicle according to the present embodiment.
FIG. 3 is a block diagram illustrating a functional configuration example of the vehicle according to the present embodiment.
FIG. 4 is a block diagram illustrating an example of a functional configuration implemented by a control unit according to the present embodiment.
FIG. 5A is a diagram (1) illustrating determination of a stop position of the vehicle using an utterance and an image according to the present embodiment.
FIG. 5B is a diagram (2) illustrating determination of the stop position of the vehicle using the utterance and the image according to the present embodiment.
FIG. 5C is a diagram (3) illustrating determination of the stop position of the vehicle using the utterance and the image according to the present embodiment.
FIG. 5D is a diagram (4) illustrating determination of the stop position of the vehicle using the utterance and the image according to the present embodiment.
FIG. 5E is a diagram (5) illustrating determination of the stop position of the vehicle using the utterance and the image according to the present embodiment.
FIG. 5F is a diagram (6) illustrating determination of the stop position of the vehicle using the utterance and the image according to the present embodiment.
FIG. 5G is a diagram (7) illustrating determination of the stop position of the vehicle using the utterance and the image according to the present embodiment.
FIG. 5H is a diagram (8) illustrating determination of the stop position of the vehicle using the utterance and the image according to the present embodiment.
FIG. 6 is a diagram illustrating a state transition of vehicle control in response to an instruction of the stop position according to the present embodiment.
FIG. 7 is a flowchart illustrating a series of operations of stop position determination processing according to the present embodiment.
FIG. 8 is a flowchart illustrating a series of operations of stop position adjustment processing using a relative position according to the present embodiment.
FIG. 9 is a diagram illustrating an example of an information processing system according to another embodiment.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### (Configuration of information processing system)

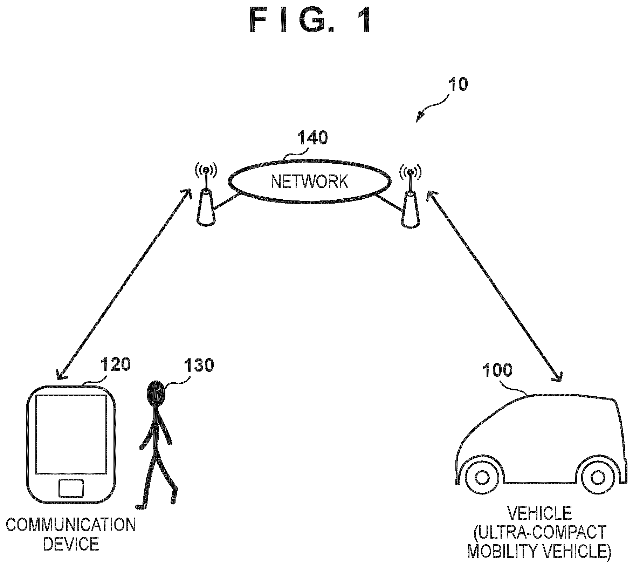

A configuration of an information processing system 10 according to the present embodiment will be described with reference to FIG. 1. The information processing system 10 includes a vehicle 100 and a communication device 120.

The vehicle 100 is an example of a moving object, and is, for example, an ultra-compact mobility vehicle that is equipped with a battery and moves mainly by the power of a motor. The ultra-compact mobility vehicle is an ultra-compact vehicle that is more compact than a general automobile and has a riding capacity of about one or two persons. The ultra-compact mobility vehicle may be able to travel on roadways or sidewalks. In the present embodiment, the vehicle 100 is, for example, a four-wheeled vehicle. Note that the present embodiment is applicable not only to vehicles but also to other moving objects. The moving object is not limited to the vehicle, and may include a small mobility such as traveling in parallel with a walking user to carry baggage or lead a person, or may include another moving object (such as a walking robot) capable of autonomous movement.

The vehicle 100 is connected to a network 140 via wireless communication such as 5th generation mobile communication, road-to-vehicle communication, or Wi-Fi. The vehicle 100 measures states inside and outside the vehicle (such as a vehicle position, a traveling state, or a target of a surrounding object) by various sensors and accumulates measured data. The data collected and transmitted as described above is also generally referred to as floating data, probe data, traffic information, or the like. The vehicle 100 may transmit the accumulated data to a server (not illustrated). When information on the vehicle is transmitted to the server, the information is transmitted at regular intervals or in response to an occurrence of a specific event. The vehicle 100 can travel by automated driving even when a user 130 does not ride the vehicle. The vehicle 100 can start traveling from a first stop position toward a position where the user 130 rides the vehicle in accordance with utterance information from the communication device 120 or the like. As will be described later, the vehicle 100 acquires the utterance information of the user transmitted from the communication device 120 via a network 140 and transmits the utterance information to the communication device 120 to adjust the stop position with the user. The vehicle 100 stops the vehicle at the adjusted stop position to allow the user to ride the vehicle.

The communication device 120 is, for example, a smartphone, but is not limited thereto, and may be an earphone type communication terminal, a personal computer, a tablet terminal, a game machine, or the like. The communication device 120 is connected to the network 140 via wireless communication such as 5th generation mobile communication or Wi-Fi.

The network 140 includes, for example, a communication network such as the Internet or a mobile phone network, and transmits information between the vehicle 100, the communication device 120, a server (not illustrated), and the like.

In the information processing system 10, in a case where the user 130 and the vehicle 100 at distant places approach each other to such an extent that a target or the like (serving as a visual mark) can be visually confirmed, the stop position is adjusted using the utterance information and image information captured by the vehicle 100.

Before the user 130 and the vehicle 100 approach each other to the extent that the target or the like can be visually confirmed, first, the vehicle 100 moves a current position of the user on a map or a position of a destination obtained from the utterance information of the user on the map as the stop position. Then, when the vehicle 100 approaches the stop position, the user is identified, or the utterance information (for example, "Is there a store nearby?") asking for a place related to the visual mark is transmitted to the communication device 120. As a result, the vehicle 100 can move toward the position of the user in a case where the user can be found (identified) from the image information, or can move toward a mark obtained from the utterance information even in a situation where it is difficult to identify the user.

The place related to the visual mark includes, for example, a name of a target that can be identified from an image. The vehicle 100 receives, from the communication device 120, the utterance information (for example, "Stop in front of the vending machine") including the place related to the visual mark. Then, the vehicle 100 identifies the target as the mark from the image information and moves to the front of a place of the mark.

### (Configuration of vehicle)

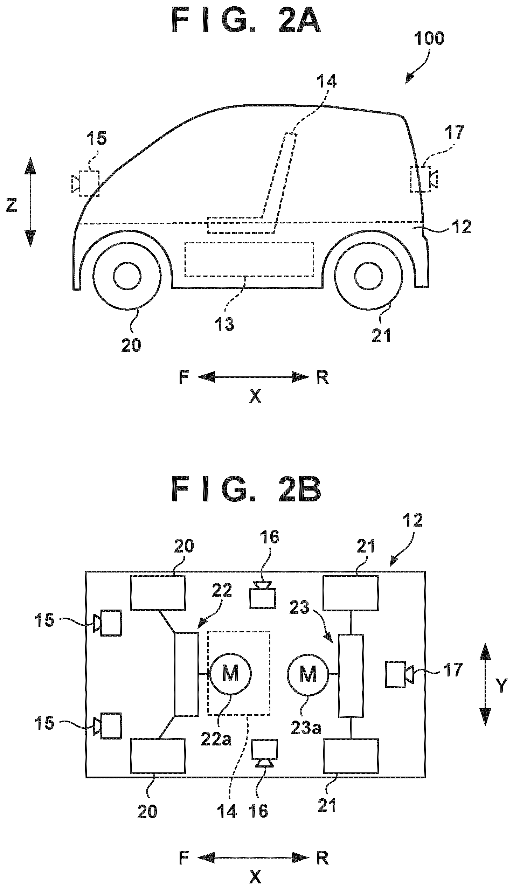

Next, a configuration of the vehicle 100 as an example of the vehicle according to the present embodiment will be described with reference to FIGS. 2A and 2B.

FIG. 2A illustrates a side surface of the vehicle 100 according to the present embodiment, and FIG. 2B illustrates an internal configuration of the vehicle 100. In the drawings, an arrow X indicates a front-and-rear direction of the vehicle 100, F indicates the front, and R indicates the rear. Arrows Y and Z indicate a width direction (lateral direction) and a vertical direction of the vehicle 100, respectively.

The vehicle 100 is an electric autonomous vehicle including a traveling unit 12 and using a battery 13 as a main power supply. The battery 13 is, for example, a secondary battery such as a lithium ion battery, and the vehicle 100 autonomously travels by the traveling unit 12 by electric power supplied from the battery 13. The traveling unit 12 is, for example, a four-wheeled vehicle including a pair of left and right front wheels 20 and a pair of left and right rear wheels 21. The traveling unit 12 may be in another form such as a form of a three-wheeled vehicle. The vehicle 100 includes a seat 14 for one person or two persons.

The traveling unit 12 includes a steering mechanism 22. The steering mechanism 22 is a mechanism that changes the steering angle of the pair of front wheels 20 using a motor 22a as a drive source. An advancing direction of the vehicle 100 can be changed by changing the steering angle of the pair of front wheels 20. The traveling unit 12 also includes a drive mechanism 23. The drive mechanism 23 is a mechanism that rotates the pair of rear wheels 21 with a motor 23a as a drive source. The vehicle 100 can be moved forward or backward by rotating the pair of rear wheels 21. The traveling unit 12 can detect and output physical quantities representing motions of the vehicle 100, such as the traveling speed, acceleration, and steering angle of the vehicle 100, and a rotational acceleration of a body of the vehicle 100.

The vehicle 100 includes detection units 15 to 17 that detect targets around the vehicle 100. The detection units 15 to 17 are a group of external sensors that monitors the surroundings of the vehicle 100, and in the case of the present embodiment, each of the detection units 15 to 17 is an imaging device that captures an image of the surroundings of the vehicle 100 and includes, for example, an optical system such as a lens and an image sensor. In the vehicle 100, in addition to the imaging device, a radar or a light detection and ranging (LiDAR) can also be used. The vehicle 100 can acquire a position (hereinafter, referred to as relative position) of a specific person or a specific target viewed from a coordinate system of the vehicle 100 based on image information obtained by the detection unit. The relative position can be indicated as, for example, a position of 1 m on the left and a position of 10 m in front.

The two detection units 15 are disposed on front portions of the vehicle 100 in a state of being separated from each other in a Y direction, and mainly detect targets in front of the vehicle 100. The detection units 16 are disposed on a left side portion and a right side portion of the vehicle 100, respectively, and mainly detect targets on sides of the vehicle 100. The detection unit 17 is disposed on a rear portion of the vehicle 100, and mainly detects targets behind the vehicle 100.

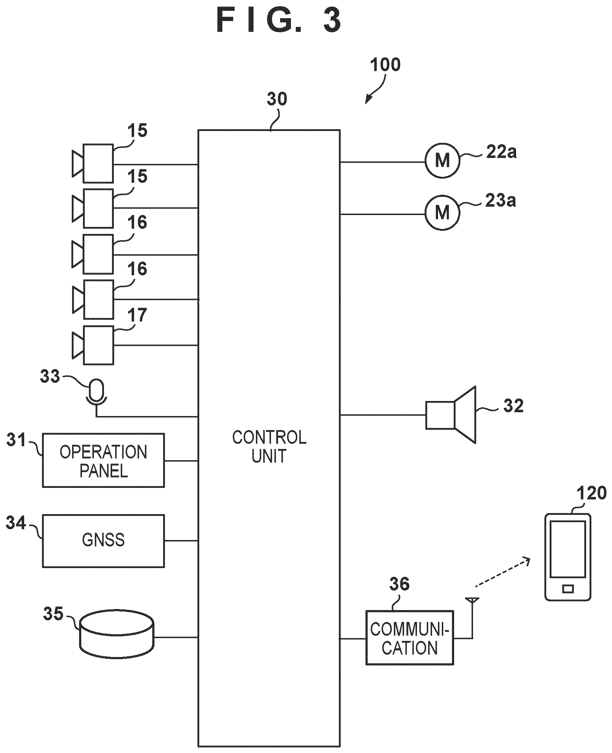

FIG. 3 is a block diagram of a control system of the vehicle 100. The vehicle 100 includes a control unit (ECU) 30. The control unit 30 functions as a control apparatus of the vehicle (moving object). The control unit 30 includes a processor represented by a central processing unit (CPU), a storage device such as a semiconductor memory, an interface with an external device, and the like. The storage device stores a program to be executed by the processor, data used for processing by the processor, and the like. A plurality of sets of the processor, the storage device, and the interface may be provided for each function of the vehicle 100 to be capable of communicating with each other.

The control unit 30 acquires detection results of the detection units 15 to 17, input information of an operation panel 31, voice information input from a voice input device 33, the utterance information from the communication device 120, and the like to execute corresponding processing. The control unit 30 performs control of the motors 22a and 23a (traveling control of the traveling unit 12), display control of the operation panel 31, notification to an occupant of the vehicle 100 by voice, and output of information. **In** addition to the CPU, the control unit 30 may further include, as a processor, a graphical processing unit (GPU) or dedicated hardware suitable for executing processing of a machine learning model such as a neural network. **In** addition, the control unit 30 executes stop position determination processing according to the present embodiment described later.

The voice input device 33 can collect a voice of the occupant of the vehicle 100. The control unit 30 can recognize the input voice and execute corresponding processing. A global navigation satellite system (GNSS) sensor 34 receives a GNSS signal and detects a current position of the vehicle 100.

A storage apparatus 35 is a mass storage device that stores map data and the like including information regarding a traveling road on which the vehicle 100 can travel, landmarks such as buildings, stores, and the like. The storage apparatus 35 may also store a program to be executed by the processor, data used for processing by the processor, and the like. The storage apparatus 35 may store various parameters (for example, trained parameters of a deep neural network, hyperparameters, and the like) of a machine learning model for voice recognition or image recognition to be executed by the control unit 30. Furthermore, the storage apparatus 35 may be provided on a server (not illustrated).

The communication device 36 is, for example, a communication device that can be connected to the network 140 via wireless communication such as 5th generation mobile communication or Wi-Fi.

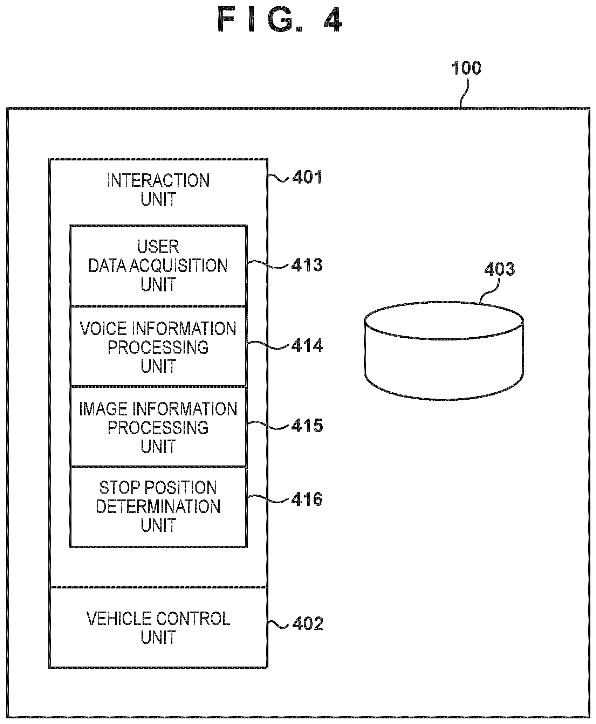

(Software configuration for stop position determination processing) Next, a software configuration for the stop position determination processing in the control unit 30 will be described with reference to FIG. 4. The present software configuration is implemented by the control unit 30 executing a program stored in a storage medium.

The software configuration according to the present embodiment includes an interaction unit 401, a vehicle control unit 402, and a database 403. The interaction unit 401 performs processing for the voice information (utterance information) transmitted and received to and from the communication device 120, processing for the image information acquired by the detection unit 15 or the like, processing for estimating the stop position, and other processing.

The vehicle control unit 402, for example, determines a route to the stop position set by the interaction unit 401, and controls each unit of the vehicle along the route. Although details will be described later, when the vehicle 100 approaches the stop position during traveling using the relative position, the vehicle control unit 402 controls the traveling speed according to a remaining distance. For example, when the remaining distance to the stop position is larger than a predetermined value, the vehicle control unit 402 controls the vehicle to approach the stop position at a first speed that is determined in advance (relatively fast). Furthermore, when the remaining distance is equal to or less than the predetermined value, the vehicle control unit 402 controls the vehicle to approach the stop position at a second speed (first speed > second speed) at which stop control can be quickly performed by safe acceleration/deceleration.

The database 403 stores various types of data such as the map data including the information regarding the traveling road on which the vehicle 100 can travel, the landmarks such as buildings, the stores, and the like described above, and travel history information of the self-vehicle and other vehicles described above.

A user data acquisition unit 413 acquires the utterance information and position information transmitted from the communication device 120. The user data acquisition unit 413 may store the acquired utterance information and position information in the database 403. As will be described later, the utterance information acquired by the user data acquisition unit 413 is input to a trained machine learning model in order to estimate an intention of the user. Note that, in the following description, a case where an instruction of the user is acquired based on the utterance information will be described as an example. However, information (instruction information) including the instruction of the user is not limited to the voice information, and may be other information including the intention of the user such as text information.

A voice information processing unit 414 includes a machine learning model that processes the voice information, and executes processing of an inference stage of the machine learning model. The machine learning model of the voice information processing unit 414 recognizes utterance content of the user and estimates an utterance intention of the user by performing computation of a deep learning algorithm using a deep neural network (DNN), for example. A machine learning algorithm separate from the recognition of the utterance content of the user and the estimation of the intention of the user may be used.

The estimation of the intention of the user may be classification processing of classifying the utterance information into a predetermined intention class. The utterance intention class may be defined for each use scene (for example, before boarding, during boarding, and after alighting) in which the user 130 uses the vehicle 100. By defining the intention class for each use scene, the number of classifications in intention recognition is limited, and recognition accuracy can be improved. For example, intention classes such as an inquiry, a pick-up request, a greeting, a place instruction, a mark expression, agreement, denial, and asking back may be associated with the use scene of "before boarding". Furthermore, for example, intention classes that are at least partially different from those before boarding, such as a route instruction, a stop instruction, an acceleration instruction, a deceleration instruction, agreement, denial, and asking back may be associated with the use scene of "during boarding". Similarly, intention classes that are at least partially different from those before boarding and those during boarding may be associated with the use scene of "after alighting". As an example of estimation of the intention class, an utterance such as "Can I ride now?" at a stage before boarding is classified into the intention of "inquiry". Furthermore, an utterance such as "Can you come soon?" is classified into the intention of "pick-up request". In addition, utterance information such as "in front of a vending machine" is classified into the intention of "mark expression".

In the recognition of the utterance content of the user, for example, when the utterance intention of the user is the place instruction, a place name or the like included in the utterance information may be identified. In the recognition of the utterance content of the user, for example, a place name, a name of a landmark such as a building, a store name, a target name, and the like included in the utterance information are recognized. The target may include a pedestrian, a signboard, a sign, equipment installed outdoors such as a vending machine, building components such as a window and an entrance, a road, a vehicle, a two-wheeled vehicle, and the like included in the utterance information.

The DNN becomes a trained state by performing processing of a training stage, and can perform recognition processing (processing of the inference stage) for utterance information by inputting the utterance information to the trained DNN. Note that, in the present embodiment, a case where the vehicle 100 executes voice recognition processing will be described as an example, but the voice recognition processing may be executed by a server (not illustrated), and a recognition result may be received from the server.

An image information processing unit 415 includes a machine learning model that processes the image information, and the trained machine learning model executes processing of an inference stage. The machine learning model of the image information processing unit 415 performs processing of recognizing a target included in the image information by performing computation of a deep learning algorithm using a deep neural network (DNN), for example. The target may include a pedestrian, a signboard, a sign, equipment installed outdoors such as a vending machine, building components such as a window and an entrance, a road, a vehicle, a two-wheeled vehicle, and the like included in the image. In addition, the machine learning model of the image information processing unit 415 can recognize a face of a person, an action (for example, hand gesture) of a person, a shape of a garment, a color of a garment, and the like included in the image information.

A stop position determination unit 416 cooperates with the voice information processing unit 414 and the image information processing unit 415 described above to execute an operation of the stop position determination processing described later. The stop position determination processing will be described later.

### (Outline of stop position determination processing)

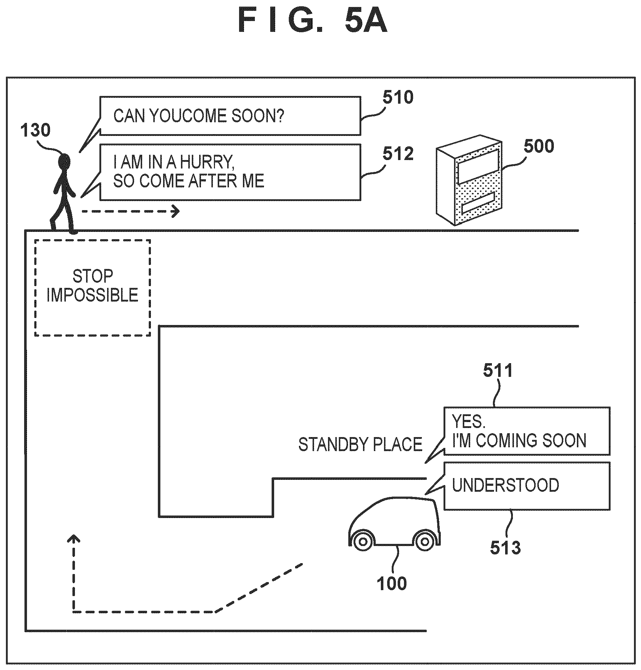

An outline of the stop position determination processing executed in the vehicle 100 will be described with reference to FIGS. 5A to 5H. Note that an operation described with the vehicle 100 as an operation subject in this description is implemented as the control unit 30 of the vehicle 100 executes a program and each unit illustrated in FIG. 4 operates.

In the stop position determination processing, when there is a pick-up request from the user, first, the user 130 and the vehicle 100 located at a distant place approach each other to such an extent that the user, the target serving as a mark, or the like can be visually confirmed. Thereafter, the vehicle 100 adjusts the stop position with the user 130 based on the voice information (utterance information) and the image information, and stops at a desired position of the user 130. The reason why the stop position can be adjusted in this manner is that the possibility that the user corrects the stop position once determined according to the surrounding situation is considered. Even in a case where there is a possibility that accuracy of voice recognition or image recognition fluctuates according to the surrounding environment such as a state of noise or light, it is possible to easily cope with the case by making the stop position adjustable. As will be described later, in the present embodiment, it is possible to adjust a new stop position while the vehicle 100 moves to a currently set stop position or is stopped, and it is possible to smoothly join at the new stop position.

FIG. 5A schematically illustrates a state in which the user 130 calls the vehicle 100 stopped at a standby place by an utterance in an area where the vehicle 100 can travel. First, the user 130 transmits utterance information 510 of "Can you come soon?" to the vehicle 100 using the communication device 120. When the vehicle 100 acquires the utterance information of the user 130 and determines that the utterance intention of the utterance information is "pick-up request", the vehicle 100 transmits utterance information 511 of "Yes, I'm coming soon" to the communication device 120. In the vicinity of the current position of the user 130, for example, there is a region where the vehicle cannot be stopped. Furthermore, the user 130 wants to get on the vehicle 100 while moving toward a vending machine 500 ahead in a moving direction. Thus, the user 130 transmits utterance information 512 of "I am in a hurry, so come after me" from the communication device 120 to the vehicle 100. When the vehicle 100 receives the utterance information 512 and recognizes an intention and content of the utterance, the vehicle 100 transmits utterance information 513 of "Understood" to the communication device 120. At this time, since designation of a destination is not included in the utterance information of the user, the vehicle 100 acquires position information (for example, GPS information) of the communication device 120 of the user 130 and sets a stop position based on the position of the user 130 and map information. Then, the vehicle 100 calculates a route through which the vehicle moves to the stop position (the position of the user 130 at the present time) from the map information, and moves according to the route.

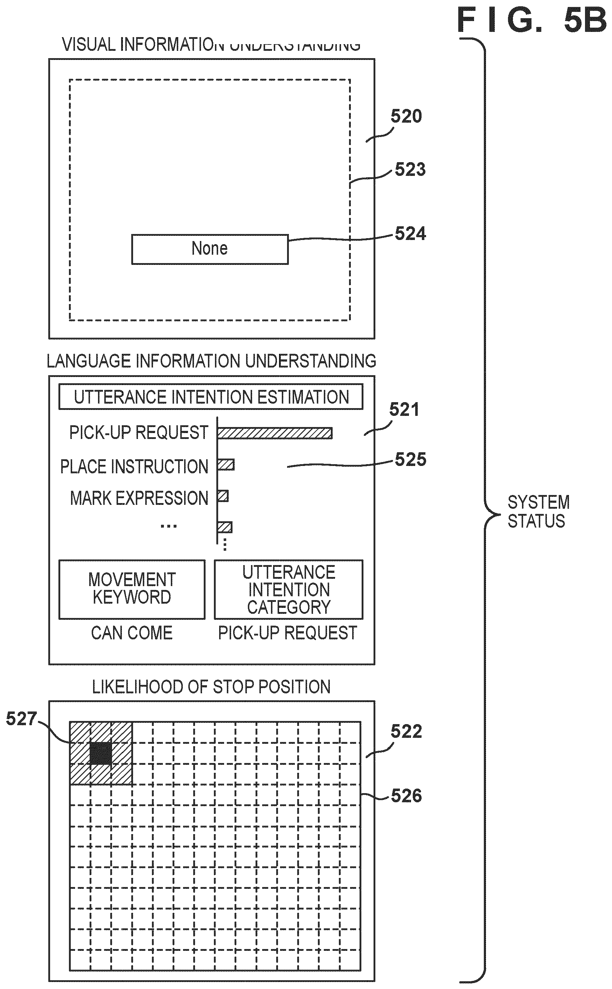

FIG. 5B schematically illustrates an example of a system status after the vehicle 100 acquires the utterance information 510 of "Can you come soon?" and performs the voice information processing and the like. As an example, the system status is indicated by visual information understanding 520 indicating a processing result of visual information, language information understanding 521 indicating a processing result of the utterance information, and likelihood 522 of an estimated stop position.

In the visual information understanding 520, a display 524 of a recognized target is displayed in captured image information 523. Note that, in the present description, information on a subject irrelevant to the description is omitted in order to ensure drawing legibility. Thus, nothing is described in the image information 523 in the example illustrated in FIG. 5B, but there is actually a subject or the like of a captured background. In the example illustrated in FIG. 5B, "None" indicating that the target is not recognized is superimposed.

In the language information understanding 521, an utterance intention estimation result 525 of the user 130 is illustrated. A horizontal bar graph indicates a probability that the estimated user intention corresponds to a category (pick-up request, place instruction, or the like). This example indicates that there is a high probability that the utterance intention of the utterance information of "Can you come soon?" of the user 130 is the pick-up request.

The likelihood 522 of the stop position is represented by a map 526 obtained by expressing a region illustrated in FIG. 5A in a mesh, and a color-coded region 527 is a region having a high probability (likelihood) of being estimated as the stop position. A blackened region indicates a region having the highest probability as the stop position. Furthermore, a region represented by hatching indicates a region having the second highest probability.

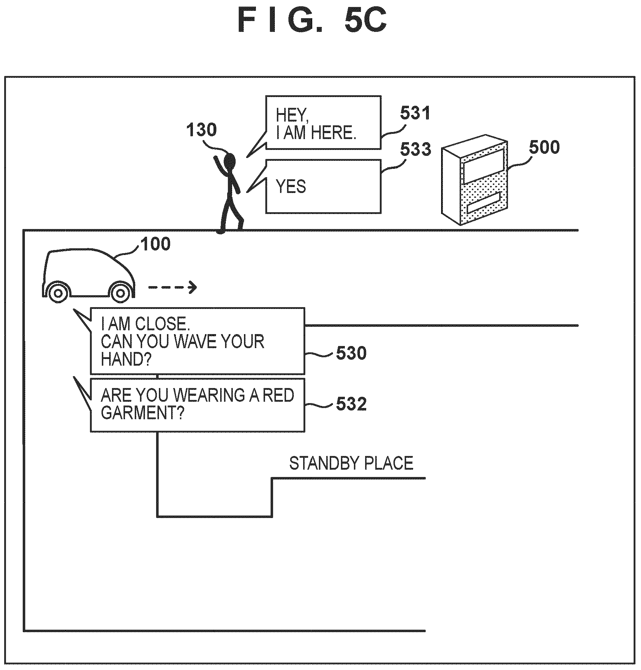

FIG. 5C illustrates a situation in which the vehicle 100 has approached the user 130 to such an extent that the user can be confirmed by the image information. **In** this situation, the vehicle 100 switches an operation state from a "traveling state based on an absolute position" using the latitude and longitude to a "stop control state based on the relative position" for controlling the stop position using the relative position. Here, the position of the moving object or the target from a position based on specific geographic coordinates such as latitude and longitude is referred to as the absolute position. Since the relative position is determined using the image information, the vehicle 100 performs an interaction for confirming whether a person in an image is the user 130. For example, the vehicle 100 transmits utterance information 530 of "I am close. Can you wave your hand?". The user 130 transmits utterance information 531 of "Hey, I am here" from the communication device 120 to the vehicle 100 while waving his or her hand. The vehicle 100 recognizes the user 130 waving a hand in the image, and transmits, for example, utterance information 532 of "Are you wearing a red garment?" to the communication device 120. In response, the user 130 transmits, from the communication device 120 to the vehicle 100, utterance information 533 indicating an agreement that "Yes, I am".

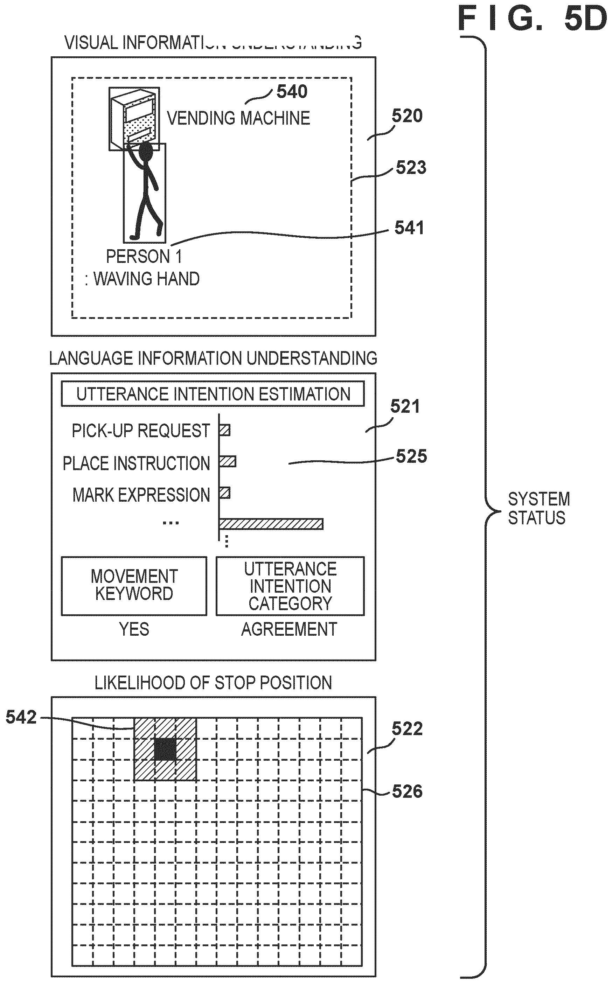

FIG. 5D schematically illustrates an example of the system status in a state in which the interaction illustrated in FIG. 5C has progressed between the vehicle 100 and the user 130. The image information 523 indicates a recognition result 541 of recognizing a person waving a hand and a recognition result 540 of recognizing a vending machine as a target. Furthermore, the language information understanding 521 receives the utterance information 533 of "Yes, I am" of the user 130 and indicates the utterance intention estimation result 525 indicating that there is a high probability that the utterance intention is "agreement". In addition, the vehicle 100 calculates the likelihood 522 of the stop position based on the relative position of the user 130 obtained from the recognition result 541 by the image information and the absolute position of the vehicle 100. In this example, since the user 130 has moved, a position of a color-coded region 542 has moved to the right side on the map 526.

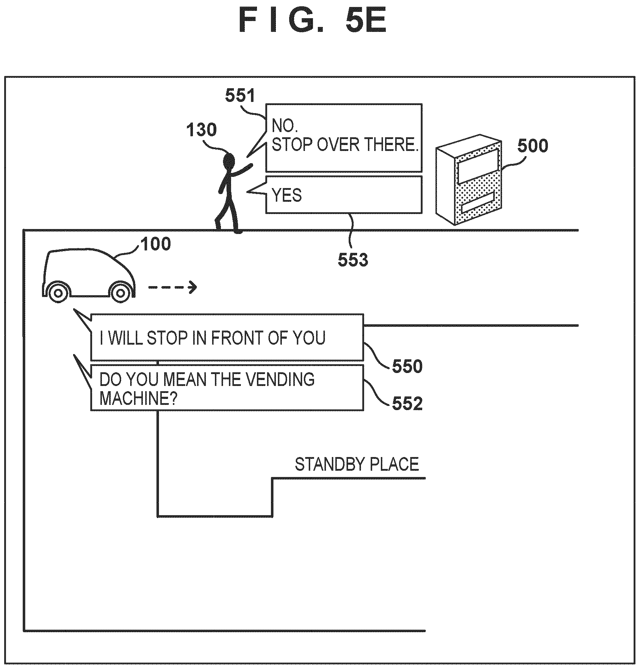

FIG. 5E illustrates an interaction example after the vehicle 100 acquires the position of the user 130 at the relative position. The vehicle 100 transmits utterance information 550 of "I will stop in front of you" to the communication device 120. In response, since the user desires to ride in another place, the user 130 transmits utterance information 551 of "No, stop over there" to the vehicle 100. At this time, the user 130 points to the vending machine 500. The vehicle 100 recognizes the mark (vending machine) from the image information based on the utterance information 551 (including "over there") and the pointing action of the user 130. Then, the vehicle 100 transmits utterance information 552 of "Do you mean the vending machine?" for confirming the mark, and then receives utterance information 553 of "Yes, I do" from the user 130. Through the interaction and the recognition processing, the vehicle 100 sets the position of the vending machine 500 as the stop position, and controls traveling so as to stop at the stop position. As described above, the vehicle 100 can interact with the user 130 while approaching the initially set stop position to search for the stop position, and can flexibly reset a new stop position even when the new stop position is instructed.

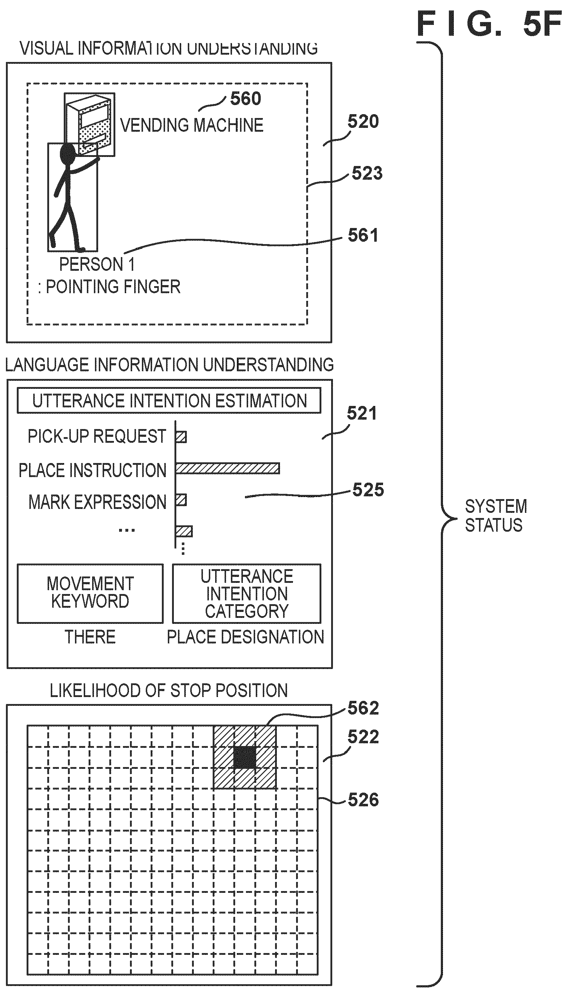

FIG. 5F schematically illustrates an example of the system status in a state in which the vehicle 100 has processed the utterance information 551 of "No, stop over there" from the user 130. The image information 523 indicates a recognition result 561 of recognizing a person pointing a finger and a recognition result 560 of recognizing the vending machine as the target. Furthermore, the language information understanding 521 receives the utterance information 551 of "No, stop over there" of the user 130 and indicates the utterance intention estimation result 525 indicating that there is a high probability that the utterance intention is "place instruction". In addition, the vehicle 100 calculates the likelihood 522 of the stop position based on the relative position of the vending machine 500 obtained from the recognition results 560 and 561 by the image information and the absolute position of the vehicle 100. In this example, since the position of the vending machine 500 is highly likely to be the stop position, a position of a color-coded region 562 has moved to the right side (position corresponding to the vending machine 500) on the map 526.

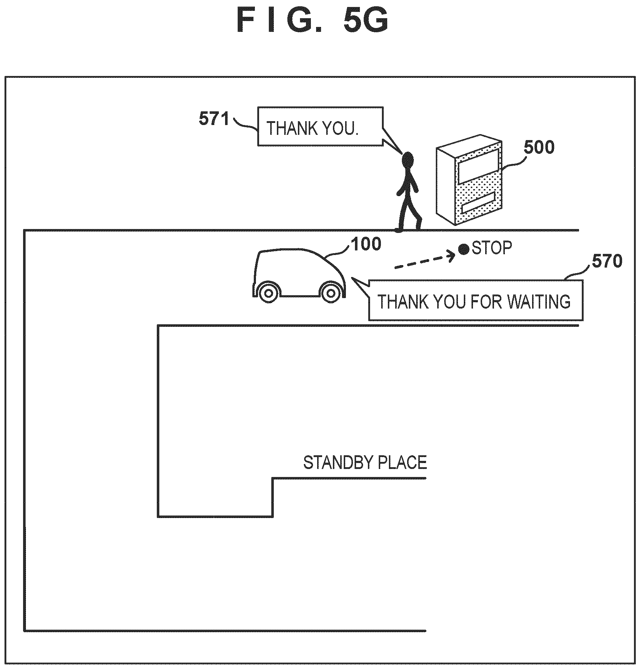

FIG. 5G illustrates an example of an interaction between the vehicle 100 and the user 130 when the vehicle 100 approaches the position of the vending machine 500. The vehicle 100 travels while continuously measuring the relative position of the vending machine appearing in the image information, and transmits utterance information 570 of "Thank you for waiting" to the communication device 120 when approaching the relative position. Furthermore, the vehicle 100 stops at the currently set stop position. When utterance information 571 of "Thank you" from the user 130 is received, the vehicle 100 can determine that dispatch is completed (that is, the relative position is not re-designated).

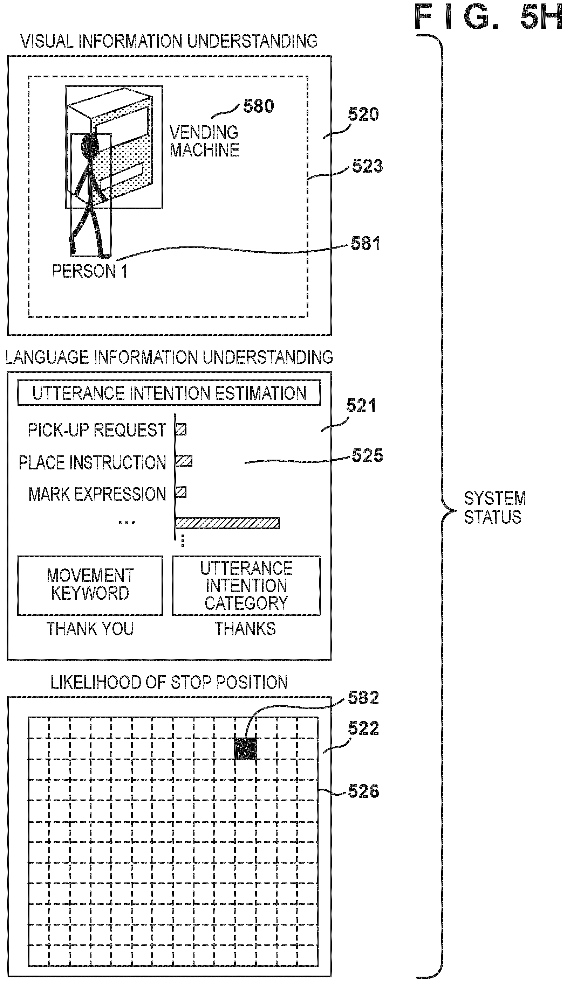

FIG. 5H schematically illustrates an example of the system status in a state in which the vehicle 100 has processed the utterance information 571 of "Thank you" from the user 130. The image information 523 indicates a recognition result 581 of recognizing a person and a recognition result 580 of recognizing the vending machine as the target. Furthermore, the language information understanding 521 receives the utterance information 571 of "Thank you" of the user 130 and indicates the utterance intention estimation result 525 indicating that there is a high probability that the utterance intention is "appreciation". In addition, the vehicle 100 calculates the likelihood 522 of the stop position based on the relative position of the vending machine 500 obtained from the recognition result 580 by the image information and the absolute position of the vehicle 100. In this example, since the position of the vending machine 500 is extremely highly likely to be the stop position, a position of a region 582 indicating the high probability indicates the position corresponding to the vending machine 500 on the map 526.

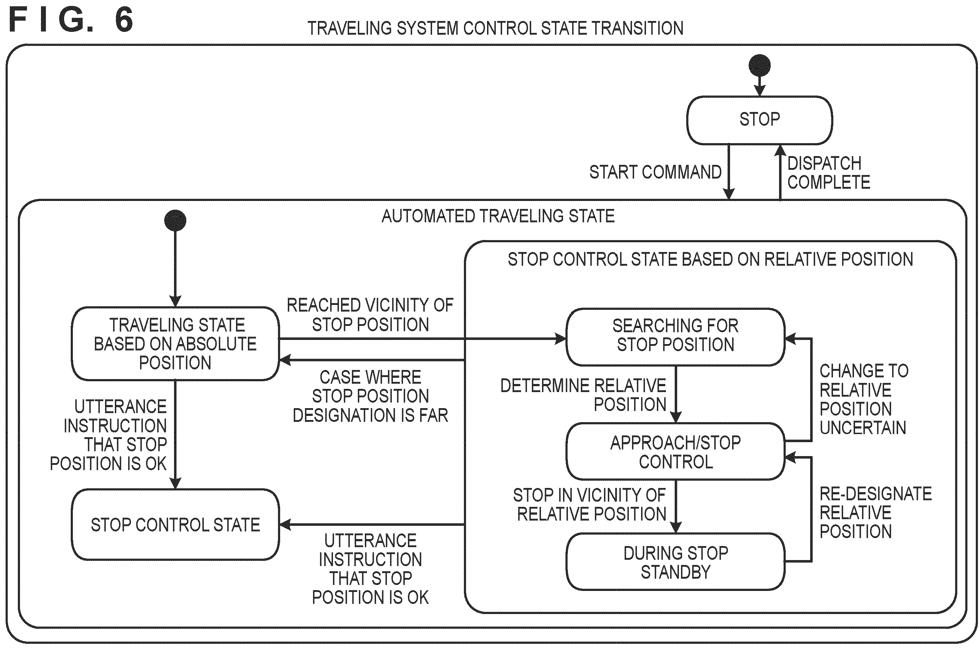

Next, a state transition of traveling system control of the vehicle 100 according to an instruction of a stop position will be described with reference to FIG. 6. First, when the state transition of the vehicle 100 is started, the vehicle 100 enters a "stopped" state. In this state, when a start command such as the pick-up request is input, the vehicle 100 enters an automated traveling state. The automated traveling state roughly includes a "traveling state based on the absolute position", a "stop control state based on the relative position", and a "stop control state".

In the "traveling state based on the absolute position", as described above, when the vehicle 100 receives the pick-up request from the user, the vehicle 100 first sets the first stop position based on the absolute position. For example, when the utterance information of the pick-up request includes a mark, the vehicle 100 sets the position of the mark based on the absolute position, and when the utterance information does not include the mark, the vehicle sets the position of the user (GPS position information of the communication device 120) based on the absolute position. Thus, the vehicle 100 transitions to the "traveling state based on the absolute position" in the "automated traveling state" and starts traveling. The vehicle 100 may confirm the stop position with the user 130 while traveling. When the utterance information of the user 130 indicates that the stop position is the current stop position, the vehicle 100 transitions to the stop control state when arriving at the stop position. For example, when a predetermined time has elapsed in the stop control state, the vehicle 100 determines that dispatch has been completed, and transitions the state to be "stopped".

When the vehicle 100 approaches the stop position (set at the absolute position) to such an extent that the user, a target as a mark, or the like can be visually confirmed, the state transitions to "during a search for the stop position" of the "stop control state based on the relative position". During the search for the stop position, the vehicle 100 specifies a user or a mark, and sets the stop position at the relative position of the specified mark or the like. For example, the vehicle 100 transmits utterance information for confirming the stop position to the user 130. As in the above-described example, when the vehicle 100 acquires the utterance information 551 of "No, stop over there", the vehicle 100 specifies an indicated object (vending machine 500), sets the relative position of the indicated object to the stop position, and transitions to the "approach/stop control" state.

In the "approach/stop control" state, the vehicle 100 moves toward the set stop position. At this time, when the vehicle 100 cannot detect a mark serving as the stop position from the image information due to, for example, appearance of an obstacle in front of the vehicle 100, the state of the vehicle 100 is transitioned to "during a search for the stop position". Furthermore, as described above, when the vehicle 100 approaches the stop position during traveling using the relative position, the vehicle 100 may control the traveling speed according to the remaining distance. When arriving at the relative position, the vehicle 100 stops and enters a stop standby state. When utterance information for re-designating the relative position is acquired from the user 130 in the stop standby state, the vehicle 100 resets the stop position and returns the state to the "approach/stop control" state. When the utterance information of the user 130 indicates that the stop position is correct, such as "Thank you", the vehicle 100 transitions to the stop control state.

In each state of "during a search for the stop position", "approach/stop control", and "during stop standby", the vehicle 100 may set a travel control parameter corresponding to each state and control the travel of the vehicle according to the vehicle speed control parameter. For example, for each state of "during a search for the stop position", "approach/stop control", and "during stop standby", a predetermined target (limit) vehicle speed, target acceleration/deceleration, and lowest state holding time may be held as a table, and the vehicle speed and the like may be controlled according to the transition of the state. For example, in the state of "during a search for the stop position", a target vehicle speed may be lower than that in the state of "approach/stop control" where the stop position has already been determined because there is a high possibility that a travel route on which the stop position is determined is (newly) changed. That is, the target vehicle speeds for "during a search for the stop position", "approach/stop control", and "during stop standby" may be set to be (A, B, 0) (where A < B). In this manner, it is possible to realize traveling in accordance with the acceleration/deceleration and the target vehicle speed set for each state along with the transition of the state. Note that the traveling control of the vehicle 100 is not limited to this example. As will be described later, the vehicle speed may be controlled according to a degree of certainty with respect to the stop position.

### (Series of operations of stop position determination processing)

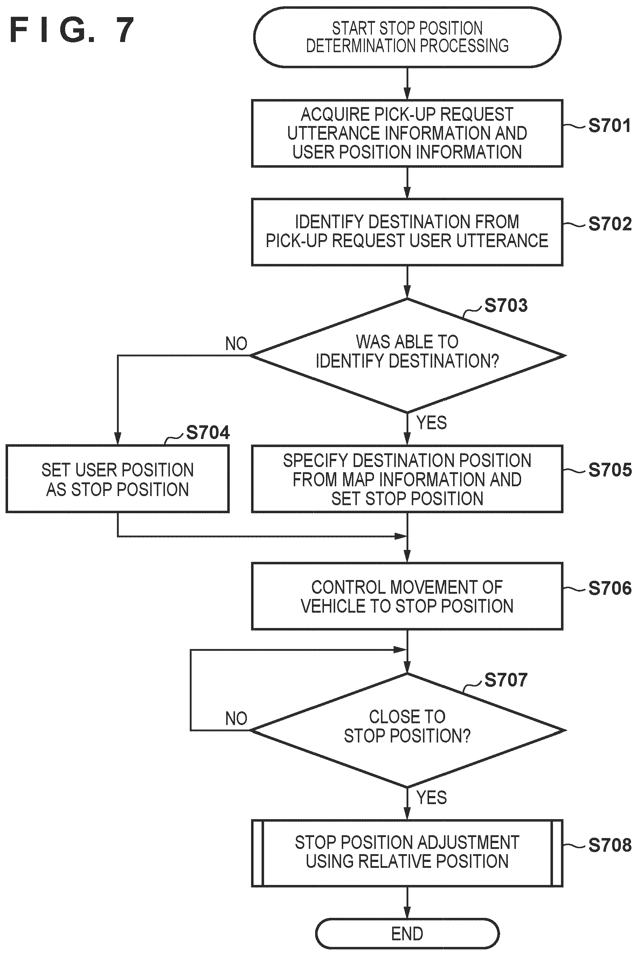

Next, a series of operations of the stop position determination processing in the vehicle 100 will be described with reference to FIG. 7. Note that the present processing is realized by the control unit 30 executing a program. In the following description, it is assumed that the control unit 30 executes each processing for the simplicity of description; however, corresponding processing is executed by each part of the interaction unit 401 and the vehicle control unit 402 (described above with reference to FIG. 4).

In S701, the control unit 30 receives the utterance information of the pick-up request and the position information of the user from the communication device 120. The utterance information of the pick-up request includes, for example, an utterance such as "Can you come soon?" described above with reference to FIG. 5A. The utterance information of the pick-up request may be information including a destination, such as "Can you come soon in front of AAA?". The position information of the user is, for example, position information detected by the communication device 120. In S702, the control unit 30 identifies the destination from the user utterance information of the pick-up request. For example, the control unit 30 may identify "AAA" as the destination from the utterance information like "Can you come soon in front of AAA?". When the utterance information includes no destination like "Can you come soon?", the control unit 30 may determine that the destination cannot be identified. Furthermore, the control unit 30 may transmit utterance information, such as asking for a destination, to the communication device 120, and additionally acquire utterance information including the destination.

In S703, the control unit 30 determines whether the destination has been identified. For example, when the utterance information of the pick-up request includes a word indicating the destination, the control unit 30 determines that the destination has been identified and advances the processing to S705, and otherwise advances the processing to S704.

In S704, the control unit 30 sets the position of the user as the stop position (when the destination cannot be identified from the utterance information). At this time, the position information of the user is the absolute position. By setting the position of the user as the stop position, the vehicle 100 first travels on a route approaching the user toward the position of the user.

In S705, the control unit 30 specifies the identified destination position from the map information and sets the specified destination position as the stop position. For example, the control unit 30 searches for the name of AAA as the destination from the map information, and sets the position information (for example, latitude/longitude information) obtained by the search as the stop position. Also in this case, the position information is the absolute position.

In S706, the control unit 30 moves the vehicle 100 to the set stop position. For example, the control unit 30 determines a travel route to the stop position based on the map information, and travels according to the travel route.

In S707, the control unit 30 determines whether the vehicle approaches the stop position. For example, the control unit 30 acquired current position information of the vehicle 100, and determines whether the position information is within a predetermined distance from the latitude and longitude determined as the stop position. When the current position of the vehicle is within the predetermined distance from the stop position, the control unit 30 determines that the vehicle approaches the stop position and advances the processing to S708, and otherwise, the control unit 30 returns the processing to S707 (that is, repeats the determination while the vehicle travels on a route).

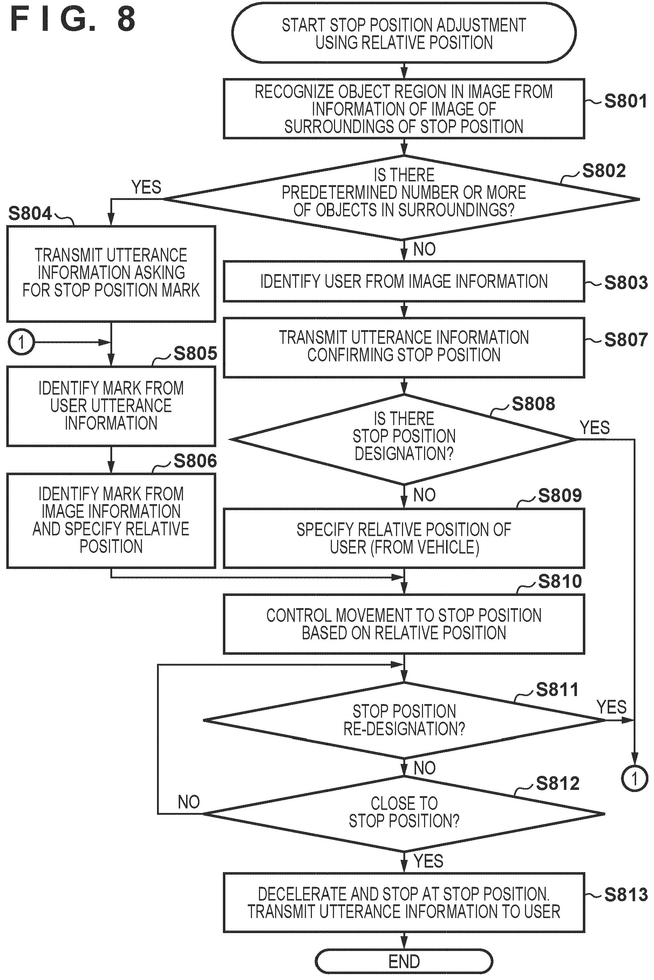

In S708, the control unit 30 executes stop position adjustment processing using the relative position. Details of the stop position adjustment processing will be described later with reference to FIG. 8. Upon completion of the stop position adjustment processing using the relative position, the control unit 30 then terminates the series of operations.

### (Operation of stop position adjustment processing using relative position)

In addition, the operation of the stop position adjustment processing using the relative position in the vehicle 100 will be described with reference to FIG. 8. Note that the present processing is realized by the control unit 30 executing a program, similarly to the processing illustrated in FIG. 7. This processing is processing of specifying the relative position of a user or a target as a mark identified by the image information acquired by the detection unit 15 and the like, and controlling traveling to the stop position using the relative position based on the image information. In other words, this processing generally corresponds to the processing in the "stop control state based on the relative position" described above with reference to FIG. 6.

In S801, the control unit 30 performs object recognition processing on the image acquired by the detection unit 15 and the like, to identify an object region in the image (corresponding to the visual mark).

In S802, the control unit 30 determines whether a predetermined number or more of objects are present in the surroundings. For example, the control unit 30 determines whether the number of object regions identified in S801 is the predetermined number or more. When the number of object regions is the predetermined number or more, the control unit 30 advances the processing to S804, and otherwise advances the processing to S803.

In S803, the control unit 30 identifies the user from the image information. At this time, the control unit 30 may further identify a user action, such as a hand gesture or a pointing action, of the user. Furthermore, the utterance information for limiting a target person when specifying the user, such as "Can you wave your hand?" or "Are you wearing a red garment?", may be transmitted to the communication device 120.

In S804, the control unit 30 transmits utterance information asking for a mark of the stop position to the communication device 120. As described above, when the number of regions detected in the image is equal to or larger than a certain number, it is difficult to specify the mark with high accuracy only from an image recognition result. Thus, when the number of regions detected in the image is equal to or larger than a certain number, the mark is identified using the utterance information and the image information by utilizing the utterance information such as transmitting the utterance information asking for a mark of the stop position. The control unit 30 may transmit additional utterance information for narrowing down visual marks, for example "Red vending machine?". When the visual mark cannot be narrowed down to one in a relationship between the utterance information of the user 130 and the image information of the vehicle 100, it is possible to reduce ambiguity of the visual mark by obtaining additional utterance information from the user. This makes it possible to identify a mark with higher accuracy.

In S805, the control unit 30 acquires the utterance information of the user and identifies the mark from the utterance information. At this time, the control unit 30 may further identify a user action, such as a hand gesture or a pointing action, of the user. For example, when the utterance information of the user 130 is "Stop over there", "over there" which is the instruction word is identified. Furthermore, when the utterance information of the user 130 is "Stop in front of the vending machine", the control unit 30 identifies "vending machine" as the mark.

In S806, the control unit 30 identifies the mark corresponding to the utterance information identified in S805 from the image information, and specifies the relative position. For example, when "over there" is identified from the utterance information of the user, the control unit 30 recognizes the pointing of the user in the image and identifies an object in that direction as the mark. Furthermore, when the "vending machine" is identified from the utterance information, the control unit 30 identifies a region of the vending machine in the image information. Then, the control unit 30 specifies the relative position of the identified object. As described above, a relative distance is a position viewed from the vehicle 100, and is represented by, for example, 1 m to the left and 10 m to the front.

Note that a probability distribution indicating a probability corresponding to a visual mark may be calculated for one or more object regions in the image. For example, when the mark included in the utterance information is "vending machine" and there are two or more regions of "vending machine" in the image, the control unit 30 may calculate the probability distribution of the object region further based on a limited linguistic element (for example, "blue") of the utterance content. In this case, for example, when there are a blue vending machine and a red vending machine in the image, a probability distribution in which the probability of the blue vending machine is "0.90" and the probability of the red vending machine is "0.10" may be calculated.

When the mark included in the utterance information is "vending machine" and there are two or more regions of "vending machine" in the image, the same probability may be assigned to both object regions. At this time, the control unit 30 may further vary the probability distribution according to a relative positional relationship between the target serving as the visual mark and the user 130. If the red vending machine is closer to the current position of the user 130 or the vehicle 100, the control unit 30 may correct the probability distribution so that the probability of the red vending machine is "0.6" and the probability of the blue vending machine is "0.4". It is possible to provide the probability distribution in which the probability increases in the order in which the vending machine can become a candidate when viewed from a direction in which the user approaches.

When the utterance information includes a positional relationship with an object such as "a vending machine on the left side of a building", the control unit 30 may calculate the probability distribution in consideration of a relative positional relationship as viewed from the vehicle 100. For example, the probability of the region of the vending machine on the left side of the building may be calculated as "0.9", and the probability of the region of the vending machine on the right side of the building may be calculated as "0.1".

When calculating the probability distribution with respect to the mark, the control unit 30 identifies an object having the highest probability as the mark and specifies the relative position thereof.

In S807, the control unit 30 transmits the utterance information for confirming the stop position to the communication device 120. For example, the control unit 30 transmits the utterance information such as "I will stop in front of you" to the communication device 120. Furthermore, the control unit 30 receives utterance information regarding confirmation by the user 130 for the utterance information for confirming the stop position. For example, the control unit 30 receives utterance information of "No, go over there".

In S808, the control unit 30 determines whether the received utterance information includes designation of the stop position. That is, the control unit 30 determines whether there is a designation to change the stop position in response to the confirmation of the stop position in S807. For example, when the control unit 30 determines that the utterance information of the user 130 includes designation of a place such as "over there" or "in front of the vending machine", the control unit 30 advances the processing to S805, and otherwise advances the processing to S809. The processing proceeds to S809, for example, when utterance information of "OK" has been received from the user 130.

In step S809, the control unit 30 specifies the relative position of the user or the target as the mark identified by the image information. As described above, a relative distance is a position viewed from the vehicle 100, and is represented by, for example, 1 m to the left and 10 m to the front.

In S810, the control unit 30 sets the specified relative position as the stop position, and controls traveling to the stop position. At this time, when the mark of the stop position is identified in the image information, the stop position is updated to the position of the mark. As described above, the control unit 30 may control the traveling speed according to the remaining distance to the stop position. Furthermore, the traveling speed may be adjusted according to the degree of certainty of the stop position. For example, when there are a plurality of visual marks (for example, two vending machines) obtained from the utterance information of the user on the image, the control unit 30 can assign the probability distribution to each vending machine according to the utterance of the user and the relative position as described above. In this case, the control unit 30 may use the value of the probability distribution as the degree of certainty. That is, when the degree of certainty is low, the control unit 30 reduces the traveling speed more than when the degree of certainty is high. In this manner, when the stop position is highly likely to be changed, it is possible to travel while suppressing the speed of the vehicle and to prepare for the change of the stop position. On the other hand, when the degree of certainty is high, the vehicle can quickly approach the stop position.

For example, the speed of the vehicle may be linearly changed according to the degree of certainty as follows. 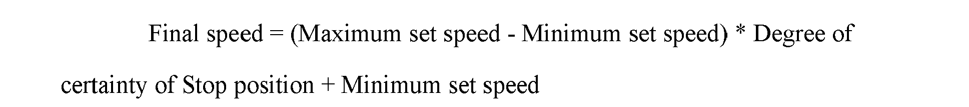 Final speed = (Maximum set speed - Minimum set speed) * Degree of certainty of Stop position + Minimum set speed

The present invention is not limited to this example, and the traveling speed according to the degree of certainty may be set using a nonlinear function.

In addition, the speed may be changed according to a degree of progress of an interaction between the user and the vehicle. For example, the traveling speed of the vehicle may be set as follows. 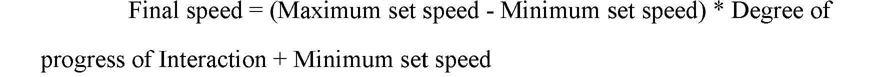 Final speed = (Maximum set speed - Minimum set speed) * Degree of progress of Interaction + Minimum set speed

Furthermore, the control unit 30 may acquire a set of a stop position and a distribution of the degrees of certainty, and obtain the final speed by using an evaluation function. For example, the following optimization problem may be considered to obtain a target speed at which the following cost within a predicted time is minimized.
- Stage cost =α * Step time + β * Acceleration/deceleration operation cost
- Terminal cost =β * Divergence (Distribution distance) (Distribution of Stop positions, distribution of Self-vehicle positions)
- Constraint: Upper limit vehicle speed, Upper limit acceleration/deceleration

In this manner, the speed control that achieves both acceleration/deceleration and arrival time to the stop position can be performed on the distribution of the stop positions.

In S811, the control unit 30 determines whether there is re-designation of the stop position (for example, reception of utterance information for designating the stop position from the user 130). When the control unit 30 determines that there is re-designation of the stop position, the control unit 30 advances the processing to S805, and otherwise advances the processing to S812. In S812, the control unit 30 determines whether a distance to the stop position has approached within a predetermined distance. The control unit 30 advances the processing to S813 when the distance to the stop position has approached within the predetermined distance, and otherwise returns the processing to S811.

In S813, in the control unit 30, since the stop position is not re-designated and the vehicle approaches the stop position, the vehicle decelerates and stops at the stop position. At this time, the control unit 30 transmits utterance information (for example, "Thank you for waiting") notifying of arrival to the communication device 120. Thereafter, the control unit 30 ends the stop position adjustment processing using the relative position, and returns to a calling-source processing. Then, the control unit 30 also ends the series of processes illustrated in FIG. 7.

As described above, the vehicle 100 first approaches to such an extent that the user, the target serving as the mark, or the like can be visually confirmed using the absolute position, and then stops at a desired position of the user 130 by adjusting the stop position with the user 130 based on the voice information (utterance information) and the image information. In this manner, the stop position of the vehicle (moving object) can be flexibly adjusted between the user and the vehicle (moving object).

### (Modifications)

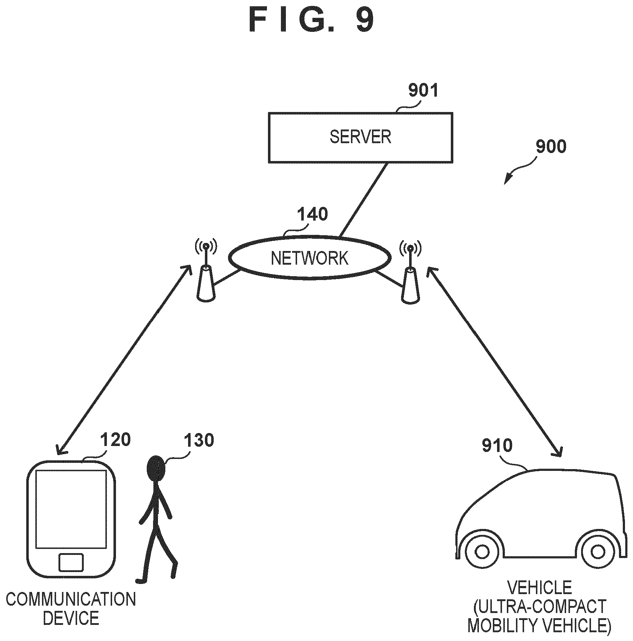

Hereinafter, modifications according to the present invention will be described. In the above embodiment, the example in which the stop position determination processing is executed in the vehicle 100 has been described. However, the stop position determination processing can also be executed on the server side. In this case, as illustrated in FIG. 9, an information processing system 900 includes a vehicle 910, the communication device 120, and a server 901.

A configuration of the information processing system 900 according to the present embodiment will be described with reference to FIG. 9. The information processing system 900 includes the vehicle 910, the server 901, and the communication device 120. The server 901 includes one or more server devices, and is capable of acquiring, via the network 140, information on the vehicle transmitted from the vehicle 910, and the utterance information and the position information transmitted from the communication device 120, and controlling traveling of the vehicle 910. The server can generally use more abundant calculation resources than the vehicle and the like. Furthermore, it is possible to collect training data under a wide variety of situations by receiving and accumulating data on images captured by various vehicles, so that it is possible to perform training in response to a wider variety of circumstances.

For example, in the embodiment according to the present modification, the utterance information of the user is transmitted from the communication device 120 to the server 901. Furthermore, the server 901 acquires image information captured by the vehicle 910 as part of floating data of the vehicle 910 together with position information and the like via the network 140. For example, after the server 901 performs processing corresponding to S701 to S705 of the stop position determination processing described above, the server 901 transmits a control amount such as the traveling speed to the vehicle 910 in S706. The vehicle 910 travels (continues traveling) according to the received control amount. Subsequently, the server 901 executes processing corresponding to S707 and S708. The server 901 executes processing corresponding to S801 to S809 also in the stop position adjustment processing using the relative position, and transmits the control amount such as the traveling speed to the vehicle 910 in S810. The vehicle 910 travels (continues traveling) according to the received control amount. Subsequently, the server 901 executes processing corresponding to S811 to S813. These processing executed by the server 901 are implemented by a processor (not illustrated) included in the server 901 executing a program stored in a storage medium (not illustrated) included in the server 901.

Furthermore, the configuration of the vehicle 910 may be the same as that of the vehicle 100 except that the control unit 30 does not execute the stop position determination processing and the vehicle is caused to travel according to the control amount from the server 901.

As described above, the server 901 causes the vehicle to approach to such an extent that the user, the target serving as the mark, or the like can be visually confirmed using the absolute position, and then stops the vehicle at a desired position of the user 130 by adjusting the stop position with the user 130 based on the voice information (utterance information) and the image information. In this manner, the stop position of the vehicle (moving object) can be flexibly adjusted between the user and the vehicle (moving object).

Note that, in the above embodiment, it has been described that the stop position of the vehicle (moving object) is adjusted between the user who is going to join and the vehicle (moving object); however, the application of the present invention is not limited thereto. For example, the present invention may be applied to a case where the user instructs the stop position based on the target serving as the mark while riding on the vehicle (moving object). For example, in a state where the user rides on the moving object, the moving object determines the stop position while responding "Is that red vending machine?" or the like in response to the utterance information (instruction information) of the user "stop in front of the vending machine over there". Thereafter, it is conceivable that the moving object adjusts the stop position based on utterance information (instruction information) such as "Stop at the convenience store over there" from the user.

### REFERENCE SIGNS LIST

- 100: Vehicle
- 120: Communication device
- 30: Control unit
- 413: User data acquisition unit
- 414: Voice information processing unit
- 415: Image information processing unit
- 416: Stop position determination unit

## Claims

1. A moving object control apparatus (30) that adjusts a stop position of a moving object (100) based on an instruction of a user (130), the moving object (100) control apparatus (30) **characterized by** comprising:
instruction acquisition means (413) configured to acquire instruction information of the user;
image acquisition means (15-17) configured to acquire a captured image captured in the moving object (100);
determination means (416) configured to determine a stop position of the moving object (100); and
control means (402) configured to control traveling of the moving object (100) to cause the moving object to travel toward the determined stop position,
**characterized in that** the determination means is configured to (i) determine a first stop position using position information of a communication device (120) used by the user or position information corresponding to a destination included in first instruction information of the user (130), and (ii) upon the control means having controlled the moving object to travel toward the first stop position such that a position of the moving object (100) falls within a predetermined distance from the first stop position, determine a second stop position based on a region of a predetermined target identified in the captured image using second instruction information of the user.

2. The moving object control apparatus (30) according to claim 1, **characterized in that** the determination means (416) is configured to determine the second stop position by identifying designation of the predetermined target from the second instruction information of the user (130) and then identifying the region of the predetermined target from the captured image.

3. The moving object control apparatus (30) according to claim 1, **characterized in that** the determination means (416) is configured to determine the second stop position by identifying the user (130) in the captured image based on the instruction information of the user and the captured image, and then identifying the region of the predetermined target from the captured image based on the second instruction information of the user (130) and an action of the user identified in the captured image.

4. The moving object control apparatus (30) according to any one of claims 1 to 3, **characterized in that** the determination means (416) is configured to determine the first stop position using the position information of the communication device (120) in response to reception of instruction information including a pick-up request.

5. The moving object control apparatus (30) according to any one of claims 1 to 3, **characterized in that** the determination means (416) is configured to determine the first stop position using one or more pieces of instruction information including a pick-up request and the destination.

6. The moving object control apparatus (30) according to any one of claims 1 to 5, **characterized in that** the control means (402) is configured to cause the moving object (100) to travel at a traveling speed reduced according to a predetermined standard in response to the position of the moving object falling within the predetermined distance from the first stop position.

7. The moving object control apparatus (30) according to claim 6, **characterized in that** the control means (402) is configured to reduce the traveling speed according to a distance from the position of the moving object (100) to a position of the predetermined target.

8. The moving object control apparatus (30) according to claim 6, **characterized in that**
the determination means (416) is configured to calculate a probability distribution indicating a probability of being the stop position for regions of one or more targets identified in the captured image, and determine the second stop position based on a region of a target having a highest probability, and
the control means (402) is configured to lower the traveling speed as the probability assigned to the target corresponding to the second stop position is lower.

9. The moving object control apparatus (30) according to claim 6, **characterized in that**
the determination means (416) is configured to calculate a probability distribution indicating a probability of being the stop position for regions of one or more targets identified in the captured image, and determine the second stop position based on a region of a target having a highest probability, and
the control means (402) is configured to control the traveling speed to be higher than the traveling speed reduced according to the predetermined standard as the probability assigned to the target corresponding to the second stop position is higher.

10. The moving object control apparatus (30) according to any one of claims 1 to 7, **characterized in that** the determination means (416) is configured to calculate a probability distribution indicating a probability of being the stop position for regions of one or more targets identified in the captured image, and determine the second stop position based on a region of a target having a highest probability.

11. The moving object control apparatus (30) according to any one of claims 1 to 7, **characterized in that** the determination means (416) is configured to calculate a probability distribution indicating a probability of being the stop position for regions of a plurality of targets identified in the captured image, and determine the second stop position according to a distance to each of targets as candidates using a predetermined number of target regions for which the probability is high as the candidates.

12. The moving object control apparatus (30) according to any one of claims 1 to 11, **characterized in that**, when the instruction acquisition means (413) acquires instruction information related to another destination or another target while the moving object (100) travels toward the determined stop position, the determination means (416) is configured to determine a new stop position related to the another destination or the another target while continuing traveling.

13. The moving object control apparatus (30) according to any one of claims 1 to 12, **characterized in that**, when the instruction acquisition means (15-17) acquires instruction information related to another destination or another target while the moving object (100) travels toward the determined stop position, the determination means (416) is configured to transmit additional instruction information for narrowing down the another destination or the another target to the communication device (120).

14. The moving object control apparatus (30) according to any one of claims 1 to 13, **characterized in that**
the first stop position is determined using an absolute position that is a position of a target from a position based on a specific geographic coordinate, and
the second stop position is determined using a relative position of the target viewed from a coordinate system of the moving object (100).

15. The moving object control apparatus (30) according to any one of claims 1 to 14, **characterized in that** the instruction acquisition means (413) is configured to acquire the instruction information based on utterance information of the user (130).

16. The moving object control apparatus (30) according to any one of claims 1 to 15, **characterized in that** the moving object (100) is an ultra-compact mobility vehicle.

17. A moving object control method for adjusting a stop position of a moving object (100) based on an instruction of a user (130), the moving object control method **characterized by** comprising:
acquiring instruction information of the user (130);
acquiring a captured image captured in the moving object (100);
determining a stop position of the moving object (100); and
controlling traveling of the moving object (100) to cause the moving object to travel toward the determined stop position,
**characterized in that** the determining a stop position of the moving object (100) includes (i) determining a first stop position using position information of a communication device used by the user or position information corresponding to a destination included in first instruction information of the user (130), and (ii) determining a second stop position based on a region of a predetermined target identified in the captured image using second instruction information of the user after controlling traveling of the moving object (100) toward the first stop position and in response to a position of the moving object (100) falling within a predetermined distance from the first stop position by traveling of the moving object (100).

18. A moving object (100) that adjusts a stop position based on an instruction of a user (130), the moving object (100) **characterized by** comprising:
utterance acquisition means configured to acquire instruction information of the user (130);
image acquisition means (15.17) configured to acquire a captured image captured in the moving object (100);
determination means (416) configured to determine a stop position of the moving object (100); and
control means (402) configured to control traveling of the moving object (100) to cause the moving object to travel toward the determined stop position,
**characterized in that** the determination means (416) is configured to (i) determine a first stop position using position information of a communication device (120) used by the user (130) or position information corresponding to a destination included in first instruction information of the user (130), and (ii) upon the control means having controlled the moving object to travel toward the first stop position such that a position of the moving object (100) falls within a predetermined distance from the first stop position, determine a second stop position based on a region of a predetermined target identified in the captured image using second instruction information of the user (130).

19. An information processing method executed by an information processing apparatus that adjusts a stop position of a moving object (100) based on an instruction of a user (130), the information processing method **characterized by** comprising:
acquiring instruction information of the user (130);
acquiring a captured image captured in the moving object (100) and position information of the moving object (100) from the moving object;
determining a stop position of the moving object (100); and
transmitting, to the moving object (100), a control command for controlling traveling of the moving object to cause the moving object to travel toward the determined stop position,
**characterized in that** the determining a stop position of the moving object (100) includes (i) determining a first stop position using position information of a communication device (120) used by the user (130) or position information corresponding to a destination included in first instruction information of the user (130), and (ii) determining a second stop position based on a region of a predetermined target identified in the captured image using second instruction information of the user (130) after controlling traveling of the moving object (100) toward the first stop position and in response to a position of the moving object falling within a predetermined distance from the first stop position by traveling of the moving object.

20. A program for causing a computer to function as each means of the moving object control apparatus (30) according to any one of claims 1 to 16.

21. A storage medium storing a program for causing a computer to function as each means of the moving object control apparatus (30) according to any one of claims 1 to 16.

## Patentansprüche

1. Steuerungsvorrichtung (30) für ein sich bewegendes Objekt, welche eine Halteposition eines sich bewegenden Objekts (100) basierend auf einer Anweisung eines Benutzers (130) anpasst, wobei die Steuerungsvorrichtung (30) für das sich bewegende Objekt (100) **dadurch gekennzeichnet ist, dass** sie umfasst:
Anweisungserfassungsmittel (413), welche dazu eingerichtet sind, Anweisungsinformationen des Benutzers zu erfassen;
Bilderfassungsmittel (15-17), welche dazu eingerichtet sind, ein aufgenommenes Bild zu erfassen, welches in dem sich bewegenden Objekt (100) aufgenommen ist;
Bestimmungsmittel (416), welche dazu eingerichtet sind, eine Halteposition des sich bewegenden Objekts (100) zu bestimmen; und
Steuermittel (402), welche dazu eingerichtet sind, ein Fahren des sich bewegenden Objekts (100) zu steuern, um das sich bewegende Objekt zu veranlassen, zu der bestimmten Halteposition zu fahren,
**dadurch gekennzeichnet, dass** die Bestimmungsmittel dazu eingerichtet sind, (i) eine erste Halteposition unter Verwendung von Positionsinformationen einer Kommunikationsvorrichtung (120), welche von dem Benutzer verwendet wird, oder von Positionsinformationen zu bestimmen, welche einem in ersten Anweisungsinformationen des Benutzers (130) enthaltenen Ziel entsprechen, und (ii) nachdem die Steuermittel das sich bewegende Objekt derart gesteuert haben, dass es zu der ersten Halteposition gefahren ist, sodass eine Position des sich bewegenden Objekts (100) innerhalb eines vorbestimmten Abstands von der ersten Halteposition liegt, eine zweite Halteposition basierend auf einem in dem aufgenommenen Bild unter Verwendung von zweiten Anweisungsinformationen des Benutzers identifizierten Bereich eines vorbestimmten Zielobjekts zu bestimmen.

2. Steuerungsvorrichtung (30) für ein sich bewegendes Objekt nach Anspruch 1, **dadurch gekennzeichnet, dass** die Bestimmungsmittel (416) dazu eingerichtet sind, die zweite Halteposition zu bestimmen, indem sie eine Bezeichnung des vorbestimmten Zielobjekts aus den zweiten Anweisungsinformationen des Benutzers (130) identifizieren und anschließend den Bereich des vorbestimmten Zielobjekts aus dem aufgenommenen Bild identifizieren.

3. Steuerungsvorrichtung (30) für ein sich bewegendes Objekt nach Anspruch 1, **dadurch gekennzeichnet, dass** die Bestimmungsmittel (416) dazu eingerichtet sind, die zweite Halteposition zu bestimmen, indem sie den Benutzer (130) in dem aufgenommenen Bild basierend auf den Anweisungsinformationen des Benutzers und dem aufgenommenen Bild identifizieren und anschließend den Bereich des vorbestimmten Zielobjekts aus dem aufgenommenen Bild basierend auf den zweiten Anweisungsinformationen des Benutzers (130) und einer in dem aufgenommenen Bild identifizierten Aktion des Benutzers identifizieren.

4. Steuerungsvorrichtung (30) für ein sich bewegendes Objekt nach einem der Ansprüche 1 bis 3, **dadurch gekennzeichnet, dass** die Bestimmungsmittel (416) dazu eingerichtet sind, die erste Halteposition unter Verwendung der Positionsinformationen der Kommunikationsvorrichtung (120) als Reaktion auf einen Empfang von Anweisungsinformationen zu bestimmen, welche eine Abholungsanfrage umfassen.

5. Steuerungsvorrichtung (30) für ein sich bewegendes Objekt nach einem der Ansprüche 1 bis 3, **dadurch gekennzeichnet, dass** die Bestimmungsmittel (416) dazu eingerichtet sind, die erste Halteposition unter Verwendung eines oder mehrerer Teile von Anweisungsinformationen zu bestimmen, welche eine Abholungsanfrage und das Ziel umfassen.

6. Steuerungsvorrichtung (30) für ein sich bewegendes Objekt nach einem der Ansprüche 1 bis 5, **dadurch gekennzeichnet, dass** die Steuermittel (402) dazu eingerichtet sind, das sich bewegende Objekt (100) zu veranlassen, mit einer gemäß einem vorbestimmten Standard reduzierten Fahrgeschwindigkeit zu fahren, als Reaktion darauf, dass die Position des sich bewegenden Objekts innerhalb des vorbestimmten Abstands von der ersten Halteposition liegt.

7. Steuerungsvorrichtung (30) für ein sich bewegendes Objekt nach Anspruch 6, **dadurch gekennzeichnet, dass** die Steuermittel (402) dazu eingerichtet sind, die Fahrgeschwindigkeit gemäß einem Abstand von der Position des sich bewegenden Objekts (100) zu einer Position des vorbestimmten Zielobjekts zu reduzieren.

8. Steuerungsvorrichtung (30) für ein sich bewegendes Objekt nach Anspruch 6, **dadurch gekennzeichnet, dass**
die Bestimmungsmittel (416) dazu eingerichtet sind, eine Wahrscheinlichkeitsverteilung zu berechnen, welche eine Wahrscheinlichkeit angibt, die Halteposition für Bereiche eines oder mehrerer in dem aufgenommenen Bild identifizierter Zielobjekte zu sein, und die zweite Halteposition basierend auf einem Bereich eines Zielobjekts mit der höchsten Wahrscheinlichkeit zu bestimmen, und
die Steuermittel (402) dazu eingerichtet sind, die Fahrgeschwindigkeit zu verringern, je niedriger die dem der zweiten Halteposition entsprechenden Zielobjekt zugewiesene Wahrscheinlichkeit ist.

9. Steuerungsvorrichtung (30) für ein sich bewegendes Objekt nach Anspruch 6, **dadurch gekennzeichnet, dass**
die Bestimmungsmittel (416) dazu eingerichtet sind, eine Wahrscheinlichkeitsverteilung zu berechnen, welche eine Wahrscheinlichkeit angibt, die Halteposition für Bereiche eines oder mehrerer in dem aufgenommenen Bild identifizierter Zielobjekte zu sein, und die zweite Halteposition basierend auf einem Bereich eines Zielobjekts mit der höchsten Wahrscheinlichkeit zu bestimmen, und
die Steuermittel (402) dazu eingerichtet sind, die Fahrgeschwindigkeit höher zu steuern als die gemäß dem vorbestimmten Standard reduzierte Fahrgeschwindigkeit, je höher die dem der zweiten Halteposition entsprechenden Zielobjekt zugewiesene Wahrscheinlichkeit ist.

10. Steuerungsvorrichtung (30) für ein sich bewegendes Objekt nach einem der Ansprüche 1 bis 7, **dadurch gekennzeichnet, dass** die Bestimmungsmittel (416) dazu eingerichtet sind, eine Wahrscheinlichkeitsverteilung zu berechnen, welche eine Wahrscheinlichkeit angibt, die Halteposition für Bereiche eines oder mehrerer in dem aufgenommenen Bild identifizierter Zielobjekte zu sein, und die zweite Halteposition basierend auf einem Bereich eines Zielobjekts mit der höchsten Wahrscheinlichkeit zu bestimmen.

11. Steuerungsvorrichtung (30) für ein sich bewegendes Objekt nach einem der Ansprüche 1 bis 7, **dadurch gekennzeichnet, dass** die Bestimmungsmittel (416) dazu eingerichtet sind, eine Wahrscheinlichkeitsverteilung zu berechnen, welche eine Wahrscheinlichkeit angibt, die Halteposition für Bereiche einer Mehrzahl von in dem aufgenommenen Bild identifizierten Zielobjekten zu sein, und die zweite Halteposition gemäß einem Abstand zu jedem der Zielobjekte als Kandidaten unter Verwendung einer vorbestimmten Anzahl von Zielobjektbereichen, für welche die Wahrscheinlichkeit hoch ist, als die Kandidaten zu bestimmen.

12. Steuerungsvorrichtung (30) für ein sich bewegendes Objekt nach einem der Ansprüche 1 bis 11, **dadurch gekennzeichnet, dass**, wenn die Anweisungserfassungsmittel (413) Anweisungsinformationen erfassen, welche sich auf ein weiteres Ziel oder ein weiteres Zielobjekt beziehen, während das sich bewegende Objekt (100) zu der bestimmten Halteposition fährt, die Bestimmungsmittel (416) dazu eingerichtet sind, eine neue Halteposition zu bestimmen, welche sich auf das weitere Ziel oder das weitere Zielobjekt bezieht, während ein Fahren fortgesetzt wird.

13. Steuerungsvorrichtung (30) für ein sich bewegendes Objekt nach einem der Ansprüche 1 bis 12, **dadurch gekennzeichnet, dass**, wenn die Anweisungserfassungsmittel (15-17) Anweisungsinformationen erfassen, welche sich auf ein weiteres Ziel oder ein weiteres Zielobjekt beziehen, während das sich bewegende Objekt (100) zu der bestimmten Halteposition fährt, die Bestimmungsmittel (416) dazu eingerichtet sind, zusätzliche Anweisungsinformationen zum Eingrenzen des weiteren Ziels oder des weiteren Zielobjekts an die Kommunikationsvorrichtung (120) zu übertragen.

14. Steuerungsvorrichtung (30) für ein sich bewegendes Objekt nach einem der Ansprüche 1 bis 13, **dadurch gekennzeichnet, dass**
die erste Halteposition unter Verwendung einer absoluten Position bestimmt wird, welche eine Position eines Zielobjekts von einer auf einer spezifischen geografischen Koordinate basierenden Position ist, und
die zweite Halteposition unter Verwendung einer relativen Position des Zielobjekts bestimmt wird, welche von einem Koordinatensystem des sich bewegenden Objekts (100) aus betrachtet wird.

15. Steuerungsvorrichtung (30) für ein sich bewegendes Objekt nach einem der Ansprüche 1 bis 14, **dadurch gekennzeichnet, dass** die Anweisungserfassungsmittel (413) dazu eingerichtet sind, die Anweisungsinformationen basierend auf Äußerungsinformationen des Benutzers (130) zu erfassen.

16. Steuerungsvorrichtung (30) für ein sich bewegendes Objekt nach einem der Ansprüche 1 bis 15, **dadurch gekennzeichnet, dass** das sich bewegende Objekt (100) ein ultrakompaktes Mobilitätsfahrzeug ist.

17. Steuerungsverfahren für ein sich bewegendes Objekt zum Anpassen einer Halteposition eines sich bewegenden Objekts (100) basierend auf einer Anweisung eines Benutzers (130), wobei das Steuerungsverfahren für ein sich bewegendes Objekt **dadurch gekennzeichnet ist, dass** es umfasst:
Erfassen von Anweisungsinformationen des Benutzers (130);
Erfassen eines aufgenommenen Bildes, welches in dem sich bewegenden Objekt (100) aufgenommen ist;
Bestimmen einer Halteposition des sich bewegenden Objekts (100); und
Steuern eines Fahrens des sich bewegenden Objekts (100), um das sich bewegende Objekt zu veranlassen, zu der bestimmten Halteposition zu fahren,
**dadurch gekennzeichnet, dass** das Bestimmen einer Halteposition des sich bewegenden Objekts (100) umfasst: (i) Bestimmen einer ersten Halteposition unter Verwendung von Positionsinformationen einer von dem Benutzer verwendeten Kommunikationsvorrichtung oder von Positionsinformationen, welche einem in ersten Anweisungsinformationen des Benutzers (130) enthaltenen Zielobjekt entsprechen, und (ii) Bestimmen einer zweiten Halteposition basierend auf einem in dem aufgenommenen Bild unter Verwendung von zweiten Anweisungsinformationen des Benutzers identifizierten Bereich eines vorbestimmten Ziels, nach dem Steuern eines Fahrens des sich bewegenden Objekts (100) zu der ersten Halteposition und als Reaktion darauf, dass eine Position des sich bewegenden Objekts (100) durch das Fahren des sich bewegenden Objekts (100) innerhalb eines vorbestimmten Abstands von der ersten Halteposition liegt.

18. Sich bewegendes Objekt (100), welches eine Halteposition basierend auf einer Anweisung eines Benutzers (130) anpasst, wobei das sich bewegende Objekt (100) **dadurch gekennzeichnet ist, dass** es umfasst:
Äußerungserfassungsmittel, welche dazu eingerichtet sind, Anweisungsinformationen des Benutzers (130) zu erfassen;
Bilderfassungsmittel (15.17), welche dazu eingerichtet sind, ein aufgenommenes Bild zu erfassen, welches in dem sich bewegenden Objekt (100) aufgenommen ist;
Bestimmungsmittel (416), welche dazu eingerichtet sind, eine Halteposition des sich bewegenden Objekts (100) zu bestimmen; und
Steuermittel (402), welche dazu eingerichtet sind, ein Fahren des sich bewegenden Objekts (100) zu steuern, um das sich bewegende Objekt zu veranlassen, zu der bestimmten Halteposition zu fahren,
**dadurch gekennzeichnet, dass** die Bestimmungsmittel (416) dazu eingerichtet sind, (i) eine erste Halteposition unter Verwendung von Positionsinformationen einer Kommunikationsvorrichtung (120), welche von dem Benutzer (130) verwendet wird, oder von Positionsinformationen zu bestimmen, welche einem in ersten Anweisungsinformationen des Benutzers (130) enthaltenen Ziel entsprechen, und (ii) nachdem die Steuermittel das sich bewegende Objekt derart gesteuert haben, dass es zu der ersten Halteposition gefahren ist, sodass eine Position des sich bewegenden Objekts (100) innerhalb eines vorbestimmten Abstands von der ersten Halteposition liegt, eine zweite Halteposition basierend auf einem in dem aufgenommenen Bild unter Verwendung von zweiten Anweisungsinformationen des Benutzers (130) identifizierten Bereich eines vorbestimmten Zielobjekts zu bestimmen.

19. Informationsverarbeitungsverfahren, welches von einer Informationsverarbeitungsvorrichtung ausgeführt wird, welche eine Halteposition eines sich bewegenden Objekts (100) basierend auf einer Anweisung eines Benutzers (130) anpasst, wobei das Informationsverarbeitungsverfahren **dadurch gekennzeichnet ist, dass** es umfasst:
Erfassen von Anweisungsinformationen des Benutzers (130);
Erfassen eines aufgenommenen Bildes, welches in dem sich bewegenden Objekt (100) aufgenommen ist, und von Positionsinformationen des sich bewegenden Objekts (100) von dem sich bewegenden Objekt;
Bestimmen einer Halteposition des sich bewegenden Objekts (100); und
Übertragen eines Steuerungsbefehls an das sich bewegende Objekt (100) zum Steuern eines Fahrens des sich bewegenden Objekts, um das sich bewegende Objekt zu veranlassen, zu der bestimmten Halteposition zu fahren,
**dadurch gekennzeichnet, dass** das Bestimmen einer Halteposition des sich bewegenden Objekts (100) umfasst: (i) Bestimmen einer ersten Halteposition unter Verwendung von Positionsinformationen einer von dem Benutzer (130) verwendeten Kommunikationsvorrichtung (120) oder von Positionsinformationen, welche einem in ersten Anweisungsinformationen des Benutzers (130) enthaltenen Ziel entsprechen, und (ii) Bestimmen einer zweiten Halteposition basierend auf einem in dem aufgenommenen Bild unter Verwendung von zweiten Anweisungsinformationen des Benutzers (130) identifizierten Bereich eines vorbestimmten Zielobjekts, nach dem Steuern eines Fahrens des sich bewegenden Objekts (100) zu der ersten Halteposition und als Reaktion darauf, dass eine Position des sich bewegenden Objekts durch das Fahren des sich bewegenden Objekts innerhalb eines vorbestimmten Abstands von der ersten Halteposition liegt.

20. Programm zum Veranlassen eines Computers, als jedes Mittel der Steuerungsvorrichtung (30) für ein sich bewegendes Objekt nach einem der Ansprüche 1 bis 16 zu fungieren.

21. Speichermedium, welches ein Programm speichert, zum Veranlassen eines Computers als jedes Mittel der Steuerungsvorrichtung (30) für ein sich bewegendes Objekt nach einem der Ansprüche 1 bis 16 zu fungieren.

## Revendications

1. Appareil (30) de commande d'objet mobile qui ajuste une position d'arrêt d'un objet mobile (100) sur la base d'une instruction d'un utilisateur (130), l'appareil (30) de commande d'objet mobile (100) étant **caractérisé en ce qu'**il comporte :
un moyen d'acquisition d'instructions (413) configuré pour acquérir des informations d'instructions de l'utilisateur ;
des moyens d'acquisition d'image (15-17) configurés pour acquérir une image capturée, capturée dans l'objet mobile (100) ;
un moyen de détermination (416) configuré pour déterminer une position d'arrêt de l'objet mobile (100) ; et
un moyen de commande (402) configuré pour commander le déplacement de l'objet mobile (100) pour amener l'objet mobile à se déplacer vers la position d'arrêt déterminée,
**caractérisé en ce que** le moyen de détermination est configuré pour (i) déterminer une première position d'arrêt à l'aide d'informations de position d'un dispositif de communication (120) utilisé par l'utilisateur ou d'informations de position correspondant à une destination comprise dans les premières informations d'instruction de l'utilisateur (130), et (ii) dès la commande, par le moyen de commande, du déplacement de l'objet mobile vers la première position d'arrêt de sorte qu'une position de l'objet mobile (100) se trouve à une distance prédéterminée de la première position d'arrêt, déterminer une deuxième position d'arrêt sur la base d'une région d'une cible prédéterminée identifiée dans l'image capturée à l'aide de deuxièmes informations d'instruction de l'utilisateur.

2. Appareil (30) de commande d'objet mobile selon la revendication 1, **caractérisé en ce que** le moyen de détermination (416) est configuré pour déterminer la deuxième position d'arrêt en identifiant la désignation de la cible prédéterminée à partir des deuxièmes informations d'instruction de l'utilisateur (130) puis en identifiant la région de la cible prédéterminée à partir de l'image capturée.

3. Appareil (30) de commande d'objet mobile selon la revendication 1, **caractérisé en ce que** le moyen de détermination (416) est configuré pour déterminer la deuxième position d'arrêt en identifiant l'utilisateur (130) dans l'image capturée sur la base des informations d'instruction de l'utilisateur et de l'image capturée, puis en identifiant la région de la cible prédéterminée à partir de l'image capturée sur la base des deuxièmes informations d'instruction de l'utilisateur (130) et d'une action de l'utilisateur identifiée dans l'image capturée.

4. Appareil (30) de commande d'objet mobile selon l'une quelconque des revendications 1 à 3, **caractérisé en ce que** le moyen de détermination (416) est configuré pour déterminer la première position d'arrêt à l'aide des informations de position du dispositif de communication (120) en réponse à la réception d'informations d'instruction comprenant une demande de course.

5. Appareil (30) de commande d'objet mobile selon l'une quelconque des revendications 1 à 3, **caractérisé en ce que** le moyen de détermination (416) est configuré pour déterminer la première position d'arrêt à l'aide d'une ou plusieurs informations d'instruction comprenant une demande de course et la destination.

6. Appareil (30) de commande d'objet mobile selon l'une quelconque des revendications 1 à 5, **caractérisé en ce que** le moyen de commande (402) est configuré pour amener l'objet mobile (100) à se déplacer à une vitesse de déplacement réduite selon une norme prédéterminée en réponse à la position de l'objet mobile se trouvant à la distance prédéterminée de la première position d'arrêt.

7. Appareil (30) de commande d'objet mobile selon la revendication 6, **caractérisé en ce que** le moyen de commande (402) est configuré pour réduire la vitesse de déplacement en fonction d'une distance de la position de l'objet mobile (100) à une position de la cible prédéterminée.

8. Appareil (30) de commande d'objet mobile selon la revendication 6, **caractérisé en ce que**
le moyen de détermination (416) est configuré pour calculer une distribution de probabilités indiquant une probabilité pour des régions d'une ou plusieurs cibles identifiées dans l'image capturée de correspondre à la position d'arrêt, et déterminer la deuxième position d'arrêt sur la base d'une région d'une cible présentant une probabilité la plus élevée, et
le moyen de commande (402) est configuré pour réduire la vitesse de déplacement puisque la probabilité attribuée à la cible correspondant à la deuxième position d'arrêt est plus faible.

9. Appareil (30) de commande d'objet mobile selon la revendication 6, **caractérisé en ce que**
le moyen de détermination (416) est configuré pour calculer une distribution de probabilités indiquant une probabilité pour des régions d'une ou plusieurs cibles identifiées dans l'image capturée de correspondre à la position d'arrêt, et déterminer la deuxième position d'arrêt sur la base d'une région d'une cible présentant une probabilité la plus élevée, et
le moyen de commande (402) est configuré pour commander la vitesse de déplacement afin qu'elle soit supérieure à la vitesse de déplacement réduite selon la norme prédéterminée puisque la probabilité attribuée à la cible correspondant à la deuxième position d'arrêt est plus élevée.

10. Appareil (30) de commande d'objet mobile selon l'une quelconque des revendications 1 à 7, **caractérisé en ce que** le moyen de détermination (416) est configuré pour calculer une distribution de probabilités indiquant une probabilité pour des régions d'une ou plusieurs cibles identifiées dans l'image capturée de correspondre à la position d'arrêt, et déterminer la deuxième position d'arrêt sur la base d'une région d'une cible présentant une probabilité la plus élevée.

11. Appareil (30) de commande d'objet mobile selon l'une quelconque des revendications 1 à 7, **caractérisé en ce que** le moyen de détermination (416) est configuré pour calculer une distribution de probabilités indiquant une probabilité pour des régions d'une pluralité de cibles identifiées dans l'image capturée de correspondre à la position d'arrêt, et déterminer la deuxième position d'arrêt selon une distance à chacune des cibles en tant que candidats en utilisant un nombre prédéterminé de régions cibles pour lesquelles la probabilité est élevée en tant que candidats.

12. Appareil (30) de commande d'objet mobile selon l'une quelconque des revendications 1 à 11, **caractérisé en ce que**, lorsque le moyen d'acquisition d'instruction (413) acquiert des informations d'instruction liées à une autre destination ou une autre cible pendant que l'objet mobile (100) se déplace vers la position d'arrêt déterminée, le moyen de détermination (416) est configuré pour déterminer une nouvelle position d'arrêt liée à l'autre destination ou à l'autre cible pendant la poursuite du déplacement.

13. Appareil (30) de commande d'objet mobile selon l'une quelconque des revendications 1 à 12, **caractérisé en ce que**, lorsque le moyen d'acquisition d'instruction (15-17) acquiert des informations d'instruction relatives à une autre destination ou une autre cible pendant que l'objet mobile (100) se déplace vers la position d'arrêt déterminée, le moyen de détermination (416) est configuré pour transmettre des informations d'instruction supplémentaires afin de préciser l'autre destination ou l'autre cible au dispositif de communication (120).

14. Appareil (30) de commande d'objet mobile selon l'une quelconque des revendications 1 à 13, **caractérisé en ce que**
la première position d'arrêt est déterminée à l'aide d'une position absolue qui est une position d'une cible à partir d'une position basée sur une coordonnée géographique spécifique, et
la deuxième position d'arrêt est déterminée à l'aide d'une position relative de la cible observée à partir d'un système de coordonnées de l'objet mobile (100).

15. Appareil (30) de commande d'objet mobile selon l'une quelconque des revendications 1 à 14, **caractérisé en ce que** le moyen d'acquisition d'instructions (413) est configuré pour acquérir les informations d'instructions sur la base d'informations d'énoncé de l'utilisateur (130).

16. Appareil (30) de commande d'objet mobile selon l'une quelconque des revendications 1 à 15, **caractérisé en ce que** l'objet mobile (100) est un véhicule de déplacement ultra-compact.

17. Procédé de commande d'objet mobile pour ajuster une position d'arrêt d'un objet mobile (100) sur la base d'une instruction d'un utilisateur (130), le procédé de commande d'objet mobile étant **caractérisé en ce qu'**il comporte :
l'acquisition d'informations d'instruction de l'utilisateur (130) ;
l'acquisition d'une image capturée, capturée dans l'objet mobile (100) ;
la détermination d'une position d'arrêt de l'objet mobile (100) ; et
la commande de déplacement de l'objet mobile (100) pour amener l'objet mobile à se déplacer vers la position d'arrêt déterminée,
**caractérisé en ce que** la détermination d'une position d'arrêt de l'objet mobile (100) comporte (i) la détermination d'une première position d'arrêt à l'aide d'informations de position d'un dispositif de communication utilisé par l'utilisateur ou d'informations de position correspondant à une destination comprise dans les premières informations d'instruction de l'utilisateur (130), et (ii) la détermination d'une deuxième position d'arrêt sur la base d'une région d'une cible prédéterminée identifiée dans l'image capturée à l'aide de deuxièmes informations d'instruction de l'utilisateur après la commande du déplacement de l'objet mobile (100) vers la première position d'arrêt et en réponse à une position de l'objet mobile (100) se trouvant à une distance prédéterminée de la première position d'arrêt par déplacement de l'objet mobile (100).

18. Objet mobile (100) qui ajuste une position d'arrêt sur la base d'une instruction d'un utilisateur (130), l'objet mobile (100) étant **caractérisé en ce qu'**il comporte :
des moyens d'acquisition d'énoncé configurés pour acquérir des informations d'instruction de l'utilisateur (130) ;
des moyens d'acquisition d'image (15,17) configurés pour acquérir une image capturée, capturée dans l'objet mobile (100) ;
un moyen de détermination (416) configuré pour déterminer une position d'arrêt de l'objet mobile (100) ; et
un moyen de commande (402) configuré pour commander le déplacement de l'objet mobile (100) pour amener l'objet mobile à se déplacer vers la position d'arrêt déterminée,
**caractérisé en ce que** le moyen de détermination (416) est configuré pour (i) déterminer une première position d'arrêt à l'aide d'informations de position d'un dispositif de communication (120) utilisé par l'utilisateur (130) ou d'informations de position correspondant à une destination comprise dans les premières informations d'instruction de l'utilisateur (130), et (ii) dès la commande, par le moyen de commande, du déplacement de l'objet mobile vers la première position d'arrêt de sorte qu'une position de l'objet mobile (100) se trouve à une distance prédéterminée de la première position d'arrêt, déterminer une deuxième position d'arrêt sur la base d'une région d'une cible prédéterminée identifiée dans l'image capturée à l'aide de deuxièmes informations d'instruction de l'utilisateur (130).

19. Procédé de traitement d'informations exécuté par un appareil de traitement d'informations qui ajuste une position d'arrêt d'un objet mobile (100) sur la base d'une instruction d'un utilisateur (130), le procédé de traitement d'informations étant **caractérisé en ce qu'**il comporte :
l'acquisition d'informations d'instruction de l'utilisateur (130) ;
l'acquisition d'une image capturée, capturée dans l'objet mobile (100), et d'informations de position de l'objet mobile (100) à partir de l'objet mobile ;
la détermination d'une position d'arrêt de l'objet mobile (100) ; et
la transmission, à l'objet mobile (100), d'un ordre de commande afin de commander le déplacement de l'objet mobile pour amener l'objet mobile à se déplacer vers la position d'arrêt déterminée,
**caractérisé en ce que** la détermination d'une position d'arrêt de l'objet mobile (100) comporte (i) la détermination d'une première position d'arrêt à l'aide d'informations de position d'un dispositif de communication (120) utilisé par l'utilisateur (130) ou d'informations de position correspondant à une destination comprise dans les premières informations d'instruction de l'utilisateur (130), et (ii) la détermination d'une deuxième position d'arrêt sur la base d'une région d'une cible prédéterminée identifiée dans l'image capturée à l'aide de deuxièmes informations d'instruction de l'utilisateur (130) après commande du déplacement de l'objet mobile (100) vers la première position d'arrêt et en réponse à une position de l'objet mobile se trouvant à une distance prédéterminée de la première position d'arrêt par déplacement de l'objet mobile.

20. Programme pour amener un ordinateur à assumer la fonction de chaque moyen de l'appareil (30) de commande d'objet mobile selon l'une quelconque des revendications 1 à 16.

21. Support de stockage stockant un programme pour amener un ordinateur à assumer la fonction de chaque moyen de l'appareil (30) de commande d'objet mobile selon l'une quelconque des revendications 1 à 16.
